# EUROPEAN PATENT APPLICATION

(11) **EP 3 800 916 A1**
(43) Date of publication of application: **07.04.2021**
(21) Application number: 19207454.0
(22) Date of filing: 06.11.2019
(51) Int. Cl.: H04W 16/02, H04W 28/16

(54) **COMMUNICATION NETWORK ARRANGEMENT AND METHOD FOR HANDLING REGISTRATION AND/OR SESSION REQUESTS**

(30) Priority: 02.10.2019 EP 19201075
(71) Applicant: NTT DOCOMO, INC., Chiyoda-ku Tokyo 100-6150 (JP)
(72) Inventor: THAKOLSRI, Srisakul, 80687 Munich (DE); SAMA, Malla Reddy, 80687 Munich (DE); GUERZONI, Riccardo, 80687 Munich (DE)
(74) Representative: Viering, Jentschura & Partner mbB Patent- und Rechtsanwälte

(57) **Abstract**

According to an embodiment, a communication network arrangement is described comprising one or more network slices of a communication network, a quota monitoring component and a management component, wherein the quota monitoring component is configured to detect whether a quota which limits the maximum number of mobile terminals registered in a network slice and/or the maximum number of sessions provided in the network slice has been reached, the quota monitoring component is configured to notify the management component if the quota has been reached and the management component is configured to reject a request of a mobile terminal for registration to the network slice or establishment of a session in the network slice if the quota has been reached.

## Description

The present disclosure relates to communication network arrangements and method for handling registration and/or session requests.

In a communication network such as a 5G mobile radio communication network it may be desirable to introduce limitations or quota with respect to the number of mobile terminals registered, e.g. for a certain network slice, or the number of sessions established, e.g. by means of a certain network slice. This may for example be used to prevent overload and thus to ensure a certain performance of the communication network. Corresponding approaches which allow enforcing such quota are desirable.

According to an embodiment, a communication network arrangement is provided comprising one or more network slices, a quota monitoring component and a management component, wherein the quota monitoring component is configured to detect whether a quota which limits the maximum number of mobile terminals registered in a network slice and/or the maximum number of sessions provided in the network slice has been reached, the quota monitoring component is configured to notify the management component if the quota has been reached and the management component is configured to reject a request of a mobile terminal for registration to the network slice or for establishment of a session in the network slice if the quota has been reached. According to a further embodiment, a method for handling registration and/or session requests according to the communication network arrangement described above is provided.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a radio communication system, for example configured according to 5G (Fifth Generation) as specified by 3GPP (Third Generation Partnership Project).
- Figure 2: shows a radio communication system having network slice quota.
- Figure 3: illustrates the handling of a network slice quota regarding the maximum number of UEs (User Equipments) allowed to be registered to a network slice of a radio communication system.
- Figure 4: illustrates the handling of a network slice quota regarding the maximum number of PDU (Protocol Data Unit) sessions allowed to be provided by a network slice of a radio communication system.
- Figure 5: shows a flow diagram illustrating an OAM (Operation, Administration and Maintenance) service enhancement to support a 3^{rd} party for configuring/updating network slice quota.
- Figure 6: shows a flow diagram illustrating an OAM service enhancement to allow network slice quota information subscription by a 5GC network or RAN (radio access network).
- Figure 7: shows a flow diagram illustrating an OAM service enhancement to allow subscription for notification when a network slice quota has been reached.
- Figure 8: shows a flow diagram illustrating an NWDAF (Network Data Analytics Function) service enhancement to allow subscription for notification when a network slice quota has been reached.
- Figure 9: shows a flow diagram illustrating the usage of a quota limit reach rejection cause for a registration reject message.
- Figure 10: shows a flow diagram illustrating the usage of a quota limit reach rejection cause for a PDU establishment reject message.
- Figure 11: shows a flow diagram illustrating addressing a racing issue in case of two UEs requesting registration via different AMFs (Access and Mobility Management Functions).
- Figure 12: shows a flow diagram illustrating an example of an NWDAF (Network Data Analytics Function) collecting information from an AMF to know about the current number of UEs registered in a
- Figure 13: particular network slice (or particular network slices) in a specified area. shows a flow diagram illustrating an example of an NWDAF collecting information from an OAM to know about the current number of UEs for one or more particular network slices in the whole network.
- Figure 14: shows a flow diagram illustrating an example of an NWDAF collecting information from an SMF to know about the current number of PDU sessions provided by means of a particular network slice (or particular network slices).
- Figure 15: shows a flow diagram illustrating an example of an NWDAF collecting information from an OAM to know about the current number of PDU sessions provided by one or more particular network slices in the whole PLMN (Public Land Mobile Network).
- Figure 16: shows a radio communication system having network slice quota in a roaming scenario.
- Figure 17: illustrates the handling of a network slice quota regarding the maximum number of UEs (user equipments) allowed to be registered to a network slice of a radio communication system in a roaming scenario.
- Figure 18: shows a flow diagram illustrating a PCF (Policy Control Function) service enhancement to support the indication of network slice quota having been reached according to a first variant.
- Figure 19: shows a flow diagram illustrating PCF and NWDAF service enhancement to support the indication of network slice quota having been reached according to a second variant.
- Figure 20: shows a flow diagram illustrating a NWDAF service enhancement to support the indication of network slice quota having been reached according to a third variant.
- Figure 21: shows a flow diagram illustrating NWDAF service enhancements to support the indication of network slice quota having been reached according to a fourth variant.
- Figure 22: shows a flow diagram illustrating an NWDAF service enhancement to support an indication of network slice quota having been reached across PLMNs.
- Figure 23: illustrates the handling of a network slice quota regarding the maximum number of UEs allowed to be registered to a network slice of a radio communication system in a roaming scenario according to another embodiment.
- Figure 24: shows a flow diagram illustrating an example of UDM (Unified Data Management) service enhancement to support an indication of network slice quota reached checking.
- Figure 25: shows a flow diagram illustrating an example of an H-PLMN (Home PLMN) NWDAF collecting information from a V-PLMN (Visited PLMN) AMF to know about the current number of registered UEs for a particular network slice(s) in a specified area.
- Figure 26: shows a flow diagram illustrating an example of an H-PLMN NWDAF collecting information from a V-PLMN SMF to know about the current number of PDU sessions for one or more particular network slices.
- Figure 27: illustrates a NEST (Network Slice Type) for a network slice having a first network slice instance and a second network slice instance.
- Figure 28: shows a radio communication system having network slice quota related to the maximum number of UEs allowed to be registered in a network slice in a standalone non-public network (standalone NPN) scenario.
- Figure 29: shows a radio communication system having network slice quota related to the maximum number of PDU sessions in a network slice in a standalone NPN (SNPN) scenario.
- Figure 30: shows a radio communication system having network slice quota related to the maximum number of UEs allowed to be registered in a network slice in a Public Network Integrated NPN (PNI-NPN) scenario.
- Figure 31: shows a radio communication system having network slice quota related to the maximum number of PDU sessions in a network slice in a Public Network Integrated NPN (PNI-NPN) scenario.
- Figure 32: illustrates possible setups of a 5GS (Fifth Generation System) with NWDAFs, NEFs (Network Exposure Functions) and other network functions across PLMNs/NPN domains.
- Figure 33: shows a communication network arrangement according to an embodiment.
- Figure 34: shows a flow diagram illustrating a method for handling registration and/or session requests according to an embodiment.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

Various examples corresponding to aspects of this disclosure are described below:
Example 1 is a communication network arrangement comprising one or more network slices of a communication network, a quota monitoring component and a management component, wherein the quota monitoring component is configured to detect whether a quota which limits the maximum number of mobile terminals registered in a network slice and/or the maximum number of sessions provided in the network slice has been reached, the quota monitoring component is configured to notify the management component if the quota has been reached and the management component is configured to reject a request of a mobile terminal for registration to the network slice or establishment of a session in the network slice if the quota has been reached.
Example 2 is the communication network arrangement of Example 1, wherein the management component is part of a core network of the communication network.
Example 3 is the communication network arrangement of Example 1 or 2, wherein the communication network is a 5G mobile communication network.
Example 4 is the communication network arrangement of any one of Examples 1 to 3, wherein the number of sessions is a number of protocol data unit sessions.
Example 5 is the communication network arrangement of any one of Examples 1 to 4, further comprising a data acquisition component configured to acquire information about a current number of mobile terminals registered in the network slice and/or a current number of sessions provided in the network slice.
Example 6 is the communication network arrangement of Example 5, wherein the quota monitoring component is configured to detect whether the quota has been reached based on a current number of mobile terminals registered in the network slice and/or a current number of sessions provided in the network slice.
Example 7 is the communication network arrangement of Example 5 or 6, wherein the data acquisition component and the quota monitoring component are implemented by the same network component.
Example 8 is the communication network arrangement of any one of Examples 5 to 7, wherein the data acquisition component is a Network Data Analytics Function or an Operation, Administration and Maintenance component or a Policy Control Function.
Example 9 is the communication network arrangement of any one of Examples 1 to 8, wherein the quota monitoring component is a Network Data Analytics Function or an Operation, Administration and Maintenance component or a Policy Control Function.
Example 10 is the communication network arrangement of any one of Examples 1 to 9, wherein the quota limits the maximum number of mobile terminals registered in the network slice and the management component comprises an Access and Mobility Management Function.
Example 11 is the communication network arrangement of any one of Examples 1 to 10, wherein the quota limits the maximum number of sessions provided in the network slice and the management component comprises a Session Management Function.
Example 12 is the communication network arrangement of any one of Examples 1 to 11, wherein the quota monitoring component is configured to notify the management component via a Policy Control Function.
Example 13 is the communication network arrangement of any one of Examples 1 to 12, comprising a storage component configured to store a specification of the quota.
Example 14 is the communication network arrangement of Example 13, wherein the storage component is configured to allow configuration of the quota by a third party network component.
Example 15 is the communication network arrangement of Example 13 or 14, wherein the storage component is an Operation, Administration and Maintenance component.
Example 16 is the communication network arrangement of any one of Examples 12 to 15, wherein the storage component and a data acquisition component configured to acquire information about a current number of mobile terminals registered in the network slice and/or a current number of sessions provided in the network slice are implemented by the same network component.
Example 17 is the communication network arrangement of any one of Examples 1 to 16, wherein the management component is configured to request from the quota monitoring component to be notified when the quota has been reached.
Example 18 is the communication network arrangement of Example 17, wherein the management component is configured to request from the quota monitoring component to be notified when the quota has been reached by means of a notification service subscription.
Example 19 is the communication network arrangement of any one of Examples 1 to 18, comprising a plurality of management components configured receive requests for registration to the network slice or establishment of a session from multiple mobile terminals and further comprising a control component configured to check, in case of a plurality of unanswered requests for registration to the network slice or establishment of a session, whether the requests may be only partially fulfilled because of the quota being reached and, if the requests can only be partially fulfilled, control one or more of the management components to reject a request received by the management components.
Example 20 is the communication network arrangement of Example 19, wherein the control component is configured to select one or more mobile terminals from which the plurality of management components have received requests for registration to the network slice or establishment of a session and to control the one or more of the management components to reject a the requests of the selected one or more mobile terminals.
Example 21 is the communication network arrangement of Example 20, wherein the control component is configured to select the one or more mobile terminals based on an operator policy and/or based on the UE's subscription information indicating the priority ranking of the one or more mobile terminals.
Example 22 is the communication network arrangement of any one of Examples 1 to 21, wherein the management component is configured to reject the request of the mobile terminal by means of transmission of a message to the mobile terminal including a back-off time during which the mobile terminal may not request registration to the network slice or establishment of a session in the network slice.
Example 23 is the communication network arrangement of any one of Examples 1 to 22, wherein the quota limits the maximum number of mobile terminals registered in the network slice and/or the maximum number of sessions provided in the network slice for mobile terminals located in a pre-defined geographic sub-area of a coverage area of the network slice and wherein the management component is configured to reject a request of a mobile terminal for registration to the network slice or establishment of a session in the network slice if the quota has been reached and the mobile terminal is located in the sub-area.
Example 24 is the communication network arrangement of any one of Examples 1 to 23, wherein the communication network arrangement comprises a first communication network and a second communication network of different providers and the management component is part of the first communication network and the quota monitoring component is part of the first communication network and/or the second communication network.
Example 25 is the communication network arrangement of any one of Examples 1 to 23, wherein the communication network arrangement comprises a first communication network which is a visited communication network for the mobile terminal and a second communication network which is a home communication network for the mobile terminal, wherein the management component is part of the visited communication network and wherein the quota monitoring component is part of the home communication network.
Example 26 is the communication network arrangement of any one of Examples 1 to 23, wherein the communication network arrangement comprises a first communication network which is non-public network and a second communication network which is a public network, wherein the management component is part of the first communication network and wherein the quota monitoring component is part of the second communication network.
Example 27 is the communication network arrangement of any one of Examples 24 to 26, Wherein the request is a request of the mobile terminal for a registration of a core network slice of the first communication network which maps to a network slice of the first communication network for which the quota is defined.
Example 28 is the communication network arrangement of any one of Examples 1 to 27, comprising a user subscription storage component storing user subscription information of the mobile terminal, wherein the user subscription information specifies the quota.
Example 29 is the communication network arrangement of Example 28, wherein the user subscription information specifies for a plurality of network slices of the communication network whether a respective quota should be checked when there is a request by the mobile terminal for registration to the respective network slice or establishment of a session in the respective network slice, respectively.
Example 30 is the communication network arrangement of Example 28 or 29, wherein the management component and/or the quota monitoring component are configured, in reaction to the request by the mobile terminal, to check its local configuration or operator's policy available at the management component and/or to consult with the user subscription storage component to determine whether a quota should be checked for the network slice and to perform the detection, the notification and/or as the case may be the rejection of the request if the quota should be checked for the network slice.
Example 31 is the communication network arrangement of any one of Examples 1 to 30, wherein the management component is configured to check whether the network slice quota has been reached based on a policy of a network provider of the communication system by means of local-configuration or by means of a network management and network orchestration platform of the network provider.
Example 32 is a method for handling registration and/or session requests comprising detecting whether a quota which limits the maximum number of mobile terminals registered in a network slice and/or the maximum number of sessions provided in the network slice has been reached, notifying a management component if the quota has been reached and the management component rejecting a request of a mobile terminal for registration to the network slice or establishment of a session in the network slice if the quota has been reached.
Example 33 is the method of Example 32, wherein the management component is part of a core network of the communication network.
Example 34 is the method of Example 32 or 33, wherein the communication network is a 5G mobile communication network.
Example 35 is the method of any one of Examples 32 to 34, wherein the number of sessions is a number of protocol data unit sessions.
Example 36 is the method of any one of Examples 32 to 35, further comprising acquiring information about a current number of mobile terminals registered in the network slice and/or a current number of sessions provided in the network slice.
Example 37 is the method of Example 36, comprising detecting whether the quota has been reached based on a current number of mobile terminals registered in the network slice and/or a current number of sessions provided in the network slice.
Example 38 is the method of Example 36 or 37, comprising performing the detecting and the acquiring by the same network component.
Example 39 is the method of any one of Examples 36 to 38, wherein acquiring is performed by a Network Data Analytics Function or an Operation, Administration and Maintenance component or a Policy Control Function.
Example 40 is the method of any one of Examples 32 to 39, wherein the detecting is performed by a Network Data Analytics Function or an Operation, Administration and Maintenance component or a Policy Control Function. Example 41 is the method of any one of Examples 32 to 40, wherein the quota limits the maximum number of mobile terminals registered in the network slice and the management component comprises an Access and Mobility Management Function.
Example 42 is the method of any one of Examples 32 to 41, wherein the quota limits the maximum number of sessions provided in the network slice and the management component comprises a Session Management Function.
Example 43 is the method of any one of Examples 32 to 42, comprising notifying the management component via a Policy Control Function.
Example 44 is the method of any one of Examples 32 to 43, comprising storing a specification of the quota.
Example 45 is the method of Example 44, comprising configuring the quota by a third party network component.
Example 46 is the method of Example 44 or 45, comprising storing the specification of the quota by an Operation, Administration and Maintenance component.
Example 47 is the method of any one of Examples 43 to 46, comprising storing the specification of the quota and performing acquiring information about a current number of mobile terminals registered in the network slice and/or a current number of sessions provided in the network slice by the same network component.
Example 48 is the method of any one of Examples 32 to 47, wherein the management component requests to be notified when the quota has been reached.
Example 49 is the method of Example 48, wherein the management component requests to be notified when the quota has been reached by means of a notification service subscription.
Example 50 is the method of any one of Examples 32 to 49, comprising a plurality of management components receiving requests for registration to the network slice or establishment of a session from multiple mobile terminals and checking, in case of a plurality of unanswered requests for registration to the network slice or establishment of a session, whether the requests may be only partially fulfilled because of the quota being reached and, if the requests can only be partially fulfilled, controlling one or more of the management components to reject a request received by the management components.
Example 51 is the method of Example 50, comprising selecting one or more mobile terminals from which the plurality of management components have received requests for registration to the network slice or establishment of a session and controlling the one or more of the management components to reject a the requests of the selected one or more mobile terminals.
Example 52 is the method of Example 51, comprising selecting the one or more mobile terminals based on an operator policy and/or based on the UE's subscription information indicating the priority ranking of the one or more mobile terminals.
Example 53 is the method of any one of Examples 32 to 52, comprising rejecting the request of the mobile terminal by means of transmission of a message to the mobile terminal including a back-off time during which the mobile terminal may not request registration to the network slice or establishment of a session in the network slice.
Example 54 is the method of any one of Examples 32 to 53, wherein the quota limits the maximum number of mobile terminals registered in the network slice and/or the maximum number of sessions provided in the network slice for mobile terminals located in a pre-defined geographic sub-area of a coverage area of the network slice and the method comprises rejecting a request of a mobile terminal for registration to the network slice or establishment of a session in the network slice if the quota has been reached and the mobile terminal is located in the sub-area.
Example 55 is the method of any one of Examples 32 to 54, performed by a communication network arrangement comprising a first communication network and a second communication network of different providers, wherein the management component is part of the first communication network and the detecting is performed by a component of the first communication network and/or the second communication network.
Example 56 is the method of any one of Examples 32 to 54, performed by a communication network arrangement comprising a first communication network which is a visited communication network for the mobile terminal and a second communication network which is a home communication network for the mobile terminal, wherein the management component is part of the visited communication network and wherein the detecting is performed by the home communication network.
Example 57 is the method of any one of Examples 32 to 54, performed by a communication network arrangement comprising a first communication network which is non-public network and a second communication network which is a public network, wherein the management component is part of the first communication network and wherein the detecting is performed by the second communication network.
Example 58 is the method of any one of Examples 55 to 57, Wherein the request is a request of the mobile terminal for a registration of a core network slice of the first communication network which maps to a network slice of the first communication network for which the quota is defined.
Example 59 is the method of any one of Examples 32 to 58, comprising storing user subscription information of the mobile terminal, wherein the user subscription information specifies the quota.
Example 60 is the method of Example 59, wherein the user subscription information specifies for a plurality of network slices of the communication system whether a respective quota should be checked when there is a request by the mobile terminal for registration to the respective network slice or establishment of a session in the respective network slice, respectively.
Example 61 is the method of Example 59 or 60, comprising checking a local configuration or operator's policy available at the management component and/or consulting, in reaction to the request by the mobile terminal, the user subscription information to determine whether a quota should be checked for the network slice and to perform the detection, the notification and/or as the case may be the rejection of the request if the quota should be checked for the network slice.
Example 62 is the method of any one of Examples 32 to 61, comprising checking whether the network slice quota has been reached based on a policy of a network provider of the communication system by means of local-configuration or by means of a network management and network orchestration platform of the network provider.

According to further embodiments, a computer program and a computer readable medium comprising instructions, which, when executed by a computer, make the computer perform the method of any one of Examples 1 to 31, are provided.

It should be noted that one or more of the features of any of the examples above may be combined with any one of the other examples.

In the following, various examples will be described in more detail.

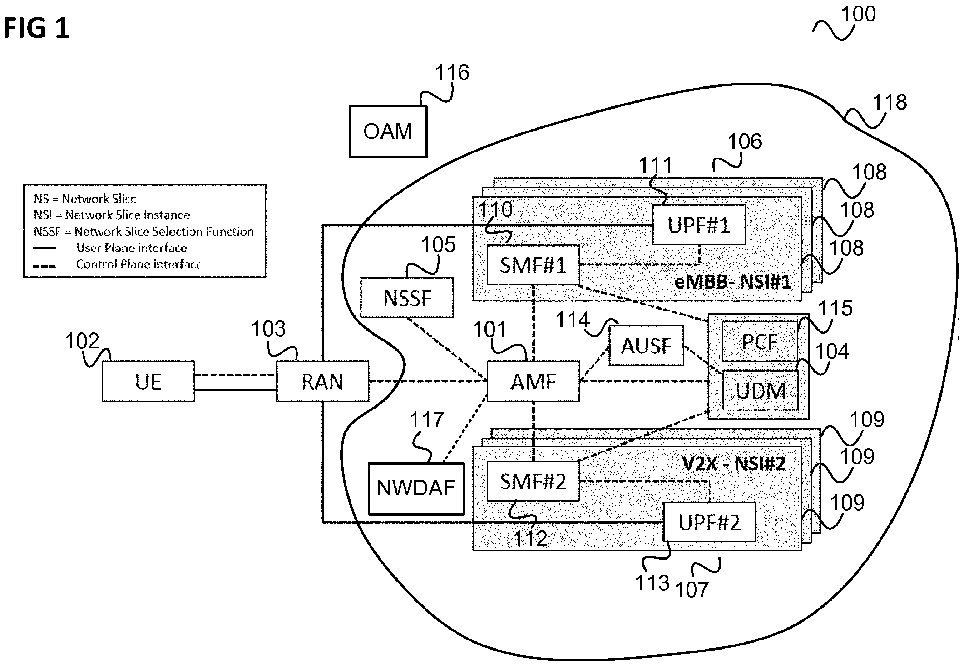

Figure 1 shows a radio communication system 100, for example configured according to 5G (Fifth Generation) as specified by 3GPP (Third Generation Partnership Project).

The radio communication system 100 includes a mobile radio terminal device 102 such as a UE (user equipment), a nano equipment (NE), and the like. The mobile radio terminal device 102, also referred to as subscriber terminal, forms the terminal side while the other components of the radio communication system 100 described in the following are part of the mobile radio communication network side, i.e. part of a mobile radio communication network (e.g. a Public Land Mobile Network PLMN).

Furthermore, the radio communication system 100 includes a radio access network 103, which may include a plurality of radio access network nodes, i.e. base stations configured to provide radio access in accordance with a 5G (Fifth Generation) radio access technology (5G New Radio). It should be noted that the radio communication system 100 may also be configured in accordance with LTE (Long Term Evolution) or another mobile radio communication standard but 5G is herein used as an example. Each radio access network node may provide a radio communication with the mobile radio terminal device 102 over an air interface. It should be noted that the radio access network 103 may include any number of radio access network nodes.

The radio communication system 100 further includes a core network 118 including an Access and Mobility Management Function (AMF) 101 connected to the RAN 103, a Unified Data Management (UDM) 104 and a Network Slice Selection Function (NSSF) 105. Here and in the following examples, the UDM may further consist of the actual UE's subscription database, which is known as, for example, the UDR (Unified Data Repository). The core network 118 further comprises an AUSF (Authentication Server Function) 114 and a PCF (Policy Control Function) 115.

The core network 118 may have multiple network slices 106, 107 and for each network slice 106, 107, the operator (also referred to MNO for Mobile Network Operator) may create multiple network slice instances (NSIs) 108, 109. For example, the core network 118 comprises a first core network slice 106 with three core network slice instances (CNIs) 108 for providing Enhanced Mobile Broadband (eMBB) and a second core network slice 107 with three core network slice instances (CNIs) 109 for providing Vehicle-to-Everything (V2X).

Typically, when a network slice is deployed, network functions (NFs) are instantiated, or (if already instantiated) referenced to form a network slice instance (NSI) and network functions that belong to a network slice instance are configured with a network slice instance identification.

Specifically, in the shown example, each instance 108 of the first core network slice 106 comprises a first Session Management Function (SMF) 110 and a first User Plane Function (UPF) 111 and each instance 109 of the second core network slice 107 comprises a second Session Management Function (SMF) 112 and a second User Plane Function (UPF) 113. The SMFs 110, 112 are for handling PDU (Protocol Data Unit) sessions, i.e. for creating, updating and removing PDU sessions and managing session context with the User Plane Function (UPF).

An S-NSSAI (Single Network Slice Selection Assistance information) identifies a network slice and is comprised of:
- A Slice/Service type (SST), which refers to the expected Network Slice behaviour in terms of features and services;
- A Slice Differentiator (SD) which is optional information that complements the slice/service type(s) to differentiate amongst multiple network slices of the same slice/service type.

NSSAI may include one or more S-NSSAIs.

Allowed NSSAI is NSSAI provided by the serving PLMN (Public Land Mobile Network) during e.g. a registration procedure, indicating the S-NSSAI values allowed by the network for a UE in the serving PLMN for the current registration area.

Configured NSSAI is NSSAI that has been provisioned in the UE. It may be applicable to one or more PLMNs.

Requested NSSAI is NSSAI that the UE provides to the network during registration in order to establish a PDU session to the requested network slice.

The core network 118 may further include a Network Data Analytics Function (NWDAF) 117. The NWDAF is responsible for providing network analysis information upon request from network functions. For example, a network function may request specific analysis information on the load level of a particular network slice. Alternatively, the network function can use the subscribe service to ensure that it is notified by the NWDAF if the load level of a network slice changes or reaches a specific threshold. The NWDAF 117 may have an interface to various network functions on the mobile radio communication network side, e.g. to the AMF 101, the SMFs 110, 112 and the PCF 115. For simplicity, only the interface between the NWDAF 117 and the AMF 101 is depicted.

The radio communication system 100 may further include an OAM (Operation, Administration and Maintenance) function (or entity) 116, e.g. implemented by one or more OAM servers which is connected to the RAN 103 and the core network 118 (connections are not shown for simplicity).

In a 5G radio communication system like the radio communication system 100, network slice related quota may be defined. This means that for example the maximum number of UEs and/or the maximum number of PDU sessions provided by a network slice 106, 107 can be limited.

Network slice quota for a network slice may for example be defined only by the mobile network operator (MNO) or may also be defined by both a 3^{rd} party service provider (e.g. providing a service by means of the network slice) and the MNO. For example, the MNO and the 3^{rd} party service provider may have a corresponding service level agreement (SLA) prior to the network slice instantiation.

The maximum number of UEs in a network slice may be defined by a "Number of terminals" attribute. The maximum number of PDU Sessions may be defined by a "Number of connections" attribute. For example, according to the information model for the network slice NRM (Network Resource Model) a "maxNumberofUEs" attribute may be provided in the OAM 116. Similarly, an attribute relating the maximum number of connections may be included in the OAM 116 according to an embodiment.

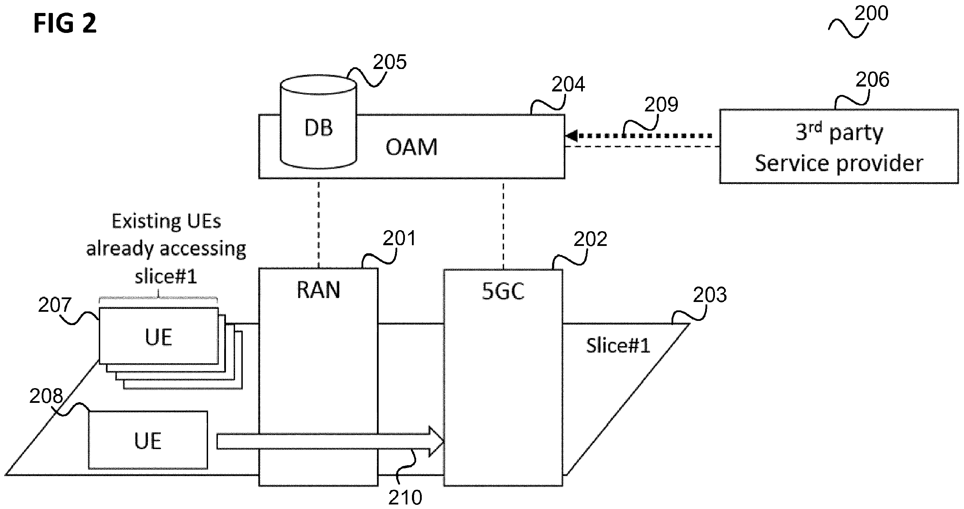

Figure 2 shows a radio communication system 200 having network slice quota.

The radio communication system 200 comprises a RAN 201, e.g. corresponding to RAN 103, a 5G core network (5GC) 202, e.g. corresponding to 5GC 118 which includes a (core) network slice 203, e.g. corresponding to one of the network slices 106, 107 and an OAM 204, e.g. corresponding to OAM 116. It should be noted that there may also be a plurality of RANs 201 providing radio access to the network slice 203.

The OAM 204 has a database 205 (e.g. a storage or memory) which stores one or more quota for the network slice 203, e.g. the maximum number of UEs and/or the maximum number of PDU Session supported by (or allowed for) the network slice by the network slice 203.

Optionally, the quota may be based on a request 209 by a 3^{rd} party service provider 206 which requests the operator of the radio communication system 200 to limit a number of UEs and/or a number of PDU Sessions for the network slice 203.

It is assumed that a plurality of UEs 207 are already accessing the network slice 203 (i.e. are registered with the network slice 203 and/or have PDU sessions by means of the network slice 203). It is further assumed that an additional UE 208 sends a request 210 to access the core network slice 203 (i.e. to register with the core network slice 203 or to have a PDU session by means of the core network slice 203).

In the following, embodiments are described providing mechanisms which allow the 5G core network 118 to handle the request 210 of the additional UE 208 if a corresponding network slice quota (i.e. maximum number of UEs or maximum number of PDU Sessions) has already been reached (by means of the UEs 207), i.e. to enforce a network slice quota.

It should be noted that the enforcement of a network slice quota could be on a different granularity, for example, the network slice quota could be defined for the whole PLMN network or for a specific (geographic) area, which is one of the areas that the network slice covers in the PLMN network (i.e. a sub-area of the PLMN coverage area). With such granularity, in other words, this would mean that there could be the maximum number of UEs to be served for the network slice in the whole PLMN coverage area or the maximum number of UEs to be served for the same network slice for a particular (sub-)area. Similarly, for example, there could also be the maximum number of PDU sessions to be served for the network slice in the whole PLMN or the maximum number of PDU Sessions to be served for the same network slice for a particular area. The particular area could be defined based on registration area, or tracking area or even the smallest area served by a base station or by geographic specification of the geographical area.

It should be noted that the mechanisms described in the following may be implemented in addition to (e.g. S-NSSAI-based) congestion control and access control and barring (e.g. UAC (Unified Access Control)) which do both not address the issue of fulfilling network slice related quota.

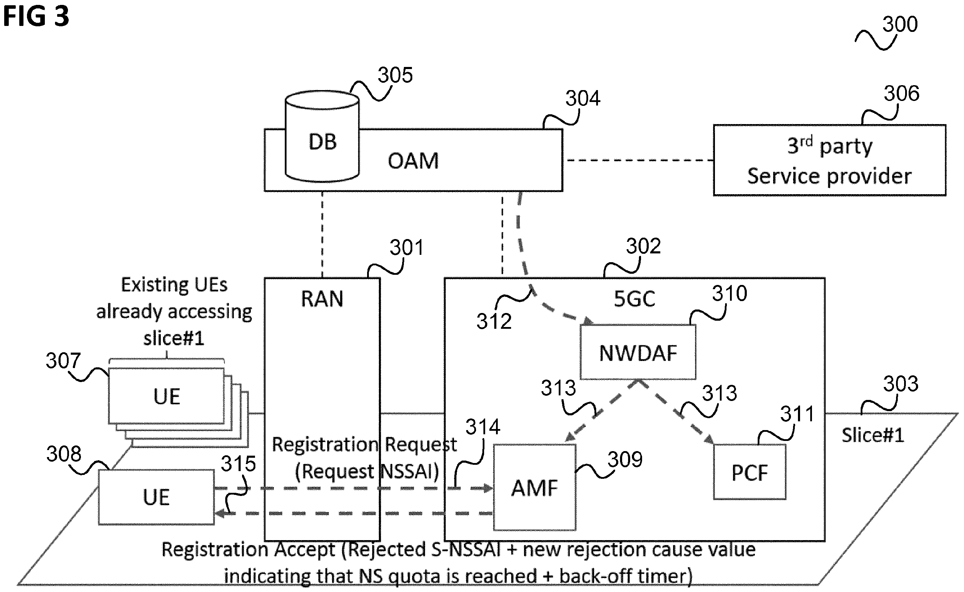

Figure 3 illustrates the handling of a network slice quota regarding the maximum number of UEs allowed to being registered to a network slice of a radio communication system 300.

Similarly to the radio communication system 200, the radio communication system 300 comprises a RAN 301, a 5G core network (5GC) 302 having a (core) network slice 303 and an OAM 304. As in the example of figure 2, a 3^{rd} party service provider may be involved in the definition of a network slice quota.

In this example the network slice quota is assumed to limit the maximum number of UEs allowed to be registered with the network slice 303. Accordingly, the OAM 304 stores, in its database 305, the related quota information which includes in this case the maximum number of UEs. Further, it acquires and stores information about the current usage of the network slice 303, i.e. the number of UEs 307 currently registered in the network slice 303. For example, the OAM 304 may collect the information of the current usage of the network slice 303 from the AMF 309 of the network slice 303.

In the following, an example is explained how the 5GC 302 handles the case that the quota has been reached and an additional UE 308 sends a registration request with a Requested NSSAI specifying the network slice in 314. Such a registration request is received by an AMF 309 of the 5GC 302.

In 312, e.g. on a regular basis (e.g., event based subscription/notification) or on-demand basis (e.g., via a request/response approach), the OAM 304 provides the related (network slice) quota information and the information about the current usage of the network slice 303 to 5GC 302, e.g. to a NWDAF (Network Data Analytics Function) 310 of the 5GC 302, e.g. corresponding to NWDAF 117 of figure 1. The OAM 304 may for example provide this information to the NWDAF 310 by means of an information element (IE) newly introduced for that purpose.

In 313, if the current usage of the network slice 303 reaches the network slice quota, the NWDAF 310 informs other 5GC network functions such that they are aware that the network slice quota has been reached. This may be performed by an information element (IE) newly introduced for that purpose. For example, the NWDAF 310 may inform the AMF 309 in this manner and/or may inform the PCF 311. If the PCF 311 is informed, it may in turn inform the AMF 309, for example in course of a communication like AM Policy Association Establishment/Modification between the AMF 309 and the PCF 311 (enhanced or extended to support notification of the network slice quota being reached).

It should be noted that instead of informing network functions via the NWDAF, the OAM 304 may also directly inform network functions like AMF 309, PCF 311 or also an SMF that the quota has been reached without NWDAF involvement.

According to the quota having been reached, the AMF 309, in 315, responds to the request of 314 by means of a rejection of registration to the network slice 303. For example, it may send a registration accept (indicating one or more allowed network slices other than the network slice 203). The registration accept message includes an indication of the rejected S-NSSAI of the network slice 303 and may further include a rejection cause value which indicates that the network slice quota is reached and may include an indication of back-off time. The UE 308 may be configured to only request registration to the network slice 303 again when the back-off time has elapsed. In case there is no allowed network slices other than the network slice 203 that the UE can be registered, then the AMF may send the Registration Reject message with the cause value of no network slice is allowed and/or with the cause value of the network slice quota has been reached.

It should be noted that the UE 308 may get a message from the core network/radio access network that the network slice quota is not reached anymore while the back-off time is running. This enables the UE to send the registration request again to the network.

Thus, the communication network enforces the network quota. The 5GC 302 may send a notification that enforcement of network slice quota reach is ongoing to the OAM 304 for information so that the OAM 304 is aware of such an enforcement.

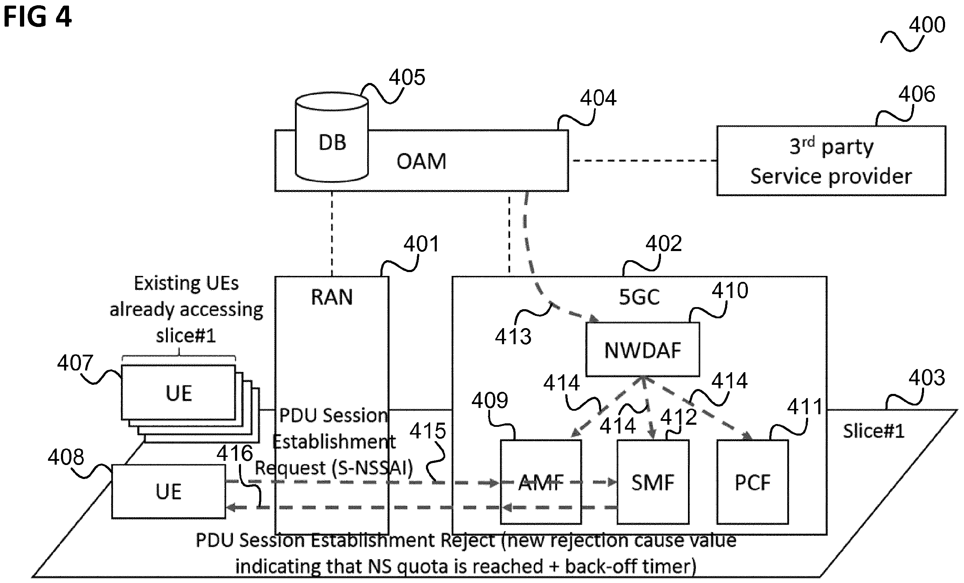

Figure 4 illustrates the handling of a network slice quota regarding the maximum number PDU sessions allowed to be provided by a network slice of a radio communication system 400.

Similarly to the radio communication system 200, the radio communication system 400 comprises a RAN 401, a 5G core network (5GC) 402 having a (core) network slice 403 and an OAM 404. As in the example of figure 2, a 3^{rd} party service provider may be involved in the definition of a network slice quota.

In this example the network slice quota is assumed to limit the maximum number of PDU sessions allowed to be provided in the network slice 403. Accordingly, the OAM 404 stores, in its database 405, the related quota information which includes in this case the maximum number of PDU sessions. Further, it acquires and stores information about the current usage of the network slice 403, i.e. the current number of PDU sessions provided in the network slice 403 to UEs 407. For example, the OAM may collect such current usage of network slice from the SMF 412 of the network slice 403.

In the following, an example is explained how the 5GC 402 handles the case that the quota has been reached and a UE 408 (which may be part of UEs 407) sends a PDU session request for an additional PDU session with a Requested NSSAI specifying the network slice in 415. Such a PDU session request is received by an SMF 412 of the 5GC 402.

In 413, e.g. on a regular basis, the OAM 404 provides the related (network slice) quota information and the information about the current usage of the network slice 403 to 5GC 402, e.g. to a NWDAF (Network Data Analytics Function) 410 of the 5GC 402, e.g. corresponding to NWDAF 117 of figure 1. The OAM 404 may for example provide this information to the NWDAF 410 by means of an information element (IE) newly introduced for that purpose.

In 414, if the current usage of the network slice 403 reaches the network slice quota, the NWDAF 410 informs other 5GC network functions such that they are aware that the network slice quota has been reached. This may be performed by an information element (IE) newly introduced for that purpose. For example, the NWDAF 410 may inform the SMF 412 in this manner and/or may inform the PCF 411. If the PCF 411 is informed, it may in turn inform the SMF 412.

It should be noted that instead of informing network functions via the NWDAF, the OAM 404 may also directly inform network functions like AMF 409, PCF 411 and SMF 412 that the quota has been reached without NWDAF involvement.

According to the quota having been reached, the SMF 409, in 416, responds to the request of 415 by means of a rejection of PDU session establishment. For example, it may send a PDU session establishment reject message which may include a rejection cause value which indicates that the network slice quota is reached, i.e., the current number of PDU Sessions already established within the network slice reaches the maximum number of PDU Sessions that the network slice can support or provide, and may include an indication of back-off time. The UE 408 may be configured to only request a PDU session provided by means the network slice 402 again when the back-off time has elapsed.

It should be noted that the UE 408 may get a message from the core network/radio access network that the network slice quota is not reached anymore during the back-off time is running. This enables the UE to send the PDU Establishment Request again to the network.

Thus, the communication network enforces the network quota. The 5GC 402 may send a notification that enforcement of network slice quota reach is ongoing to the OAM 404 for information so that the OAM 404 is aware of such an enforcement.

As mentioned above, a 3^{rd} party service provider 406 may be involved in the definition of network slice quota in the OAM 404, 405.

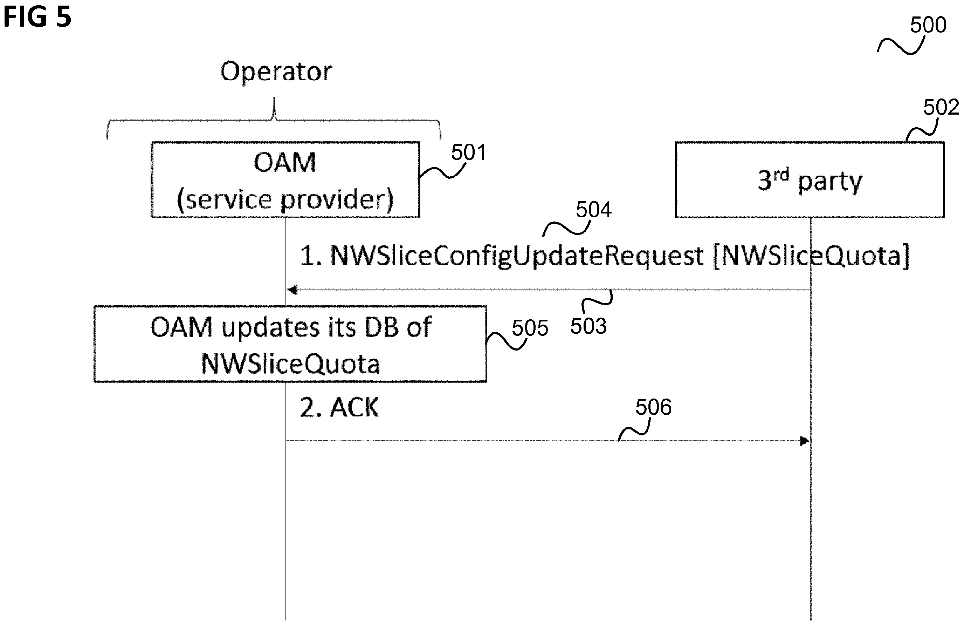

Figure 5 shows a flow diagram 500 illustrating an OAM service enhancement to support a 3^{rd} party for configuring or updating network slice quota.

An OAM 501 belonging to an operator and acting as a service provider in this case as well as a 3^{rd} party (e.g. 3^{rd} party server) are involved in the flow.

In 503, the 3^{rd} party transmits an NWSliceConfigUpdateRequest message 504 which may include a specification of a network slice quota. The network slice quota can be the maximum number of the UEs or the maximum number of PDU Sessions that the network slice supports. The message 504 may be of a message type newly introduced for that purpose and may include the specification of the network slice quota by means of an information element newly introduced for that purpose.

In response, in 505, the OAM 501 updates its database (e.g. corresponding to OAM database 305, 405) with the specified network slice quota and acknowledges the update (or definition) of the network slice quota in 506 to the 3^{rd} party 502.

Components of the radio communication system 300, 400 such as network functions or the RAN 301, 401 may acquire information from the OAM 304, 404 about the network slice quota defined by a corresponding subscription.

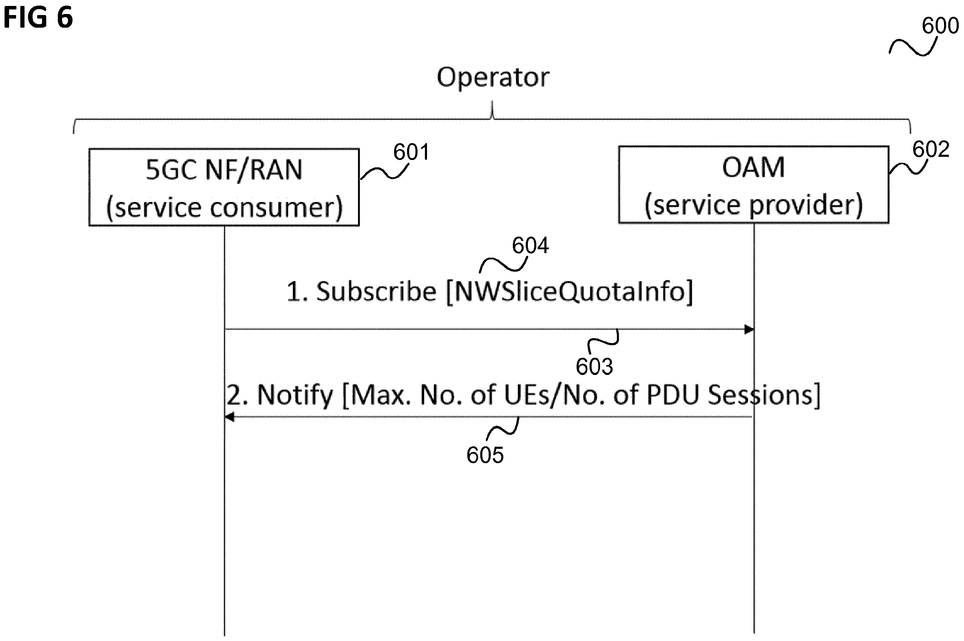

Figure 6 shows a flow diagram 600 illustrating an OAM service enhancement to allow network slice quota information subscription by a 5GC network or RAN.

A 5GC network function or RAN component 601, acting as service consumer, and an OAM 602, acting as service provider, are involved in the flow. Both belong the mobile network operator.

In 603, the 5GC network function or RAN component 601 sends a subscribe message 604 to the OAM 602 to subscribe to be notified about the information about the network slice quota being defined. This may happen by means of an information element newly introduced for that purpose. It may specify an S-NSSAI.

In response, in 605, the OAM 602 notifies the 5GC network function or RAN component 601 about the maximum number of UEs and/or maximum number of PDU sessions allowed for a network slice (e.g. per network slice for a plurality of network slices for which the information was requested). The OAM 602 may repeat this in case the information is updated. The OAM 602 may transmit this information by means of an information element newly introduced for that purpose.

Similarly, components of the radio communication system 300, 400 such as network functions or the RAN 301, 401 or also the 3^{rd} party may acquire information from the OAM 304, or may subscribe to the information from the OAM 304, 404 about the network slice quota being reached.

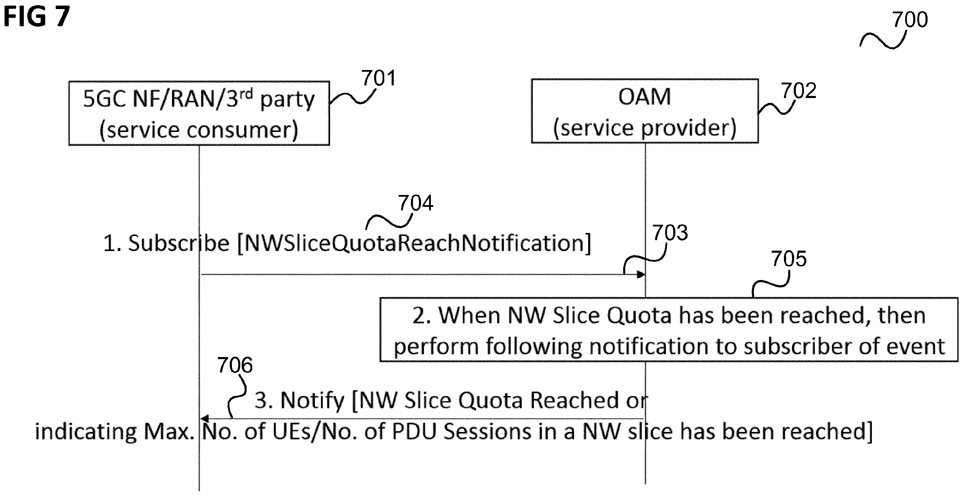

Figure 7 shows a flow diagram 700 illustrating an OAM service enhancement to allow subscription for notification when a network slice quota has been reached.

A 5GC network function, RAN component or 3^{rd} party component 701, acting as service consumer, and an OAM 702, acting as service provider, are involved in the flow. The 5GC network function, the RAN component and the OAM belong to the mobile network operator. The 3^{rd} party component could be the Application Function, which could be entity owned by the operator serving as the service provider or could be an entity owned by the 3^{rd} party service provider.

In 703, the 5GC network function, RAN component or 3^{rd} party component 701 sends a subscribe message 704 to the OAM 702 to subscribe to be notified about the network slice quota being reached. This may happen by means of an information element newly introduced for that purpose. It may specify an S-NSSAI.

In response, in 706, when the network slice quota has been reached in 705, the OAM 702 notifies the 5GC network function or RAN component or 3^{rd} party component 701 that the network slice quota has been reached and/or may indicate that the maximum number of UEs and/or the maximum number of PDU Sessions in a network slice (e.g. for which the notification has been requested) has been reached. The OAM 702 may transmit this information by means of an information element newly introduced for that purpose.

For the case that the NWDAF 310, 410 is informed by the OAM 304, 404 when a network slice quota is fulfilled, components of the radio communication system 300, 400 such as network functions or the RAN 301, 401 may acquire information from the NWDAF 310, 410 about the network slice quota being reached by means of a corresponding subscription. Alternatively, the network functions in the 5GC or the RAN 301, 401 may acquire information from the OAM 304, 404 directly without the NWDAF 310, 410 being involved.

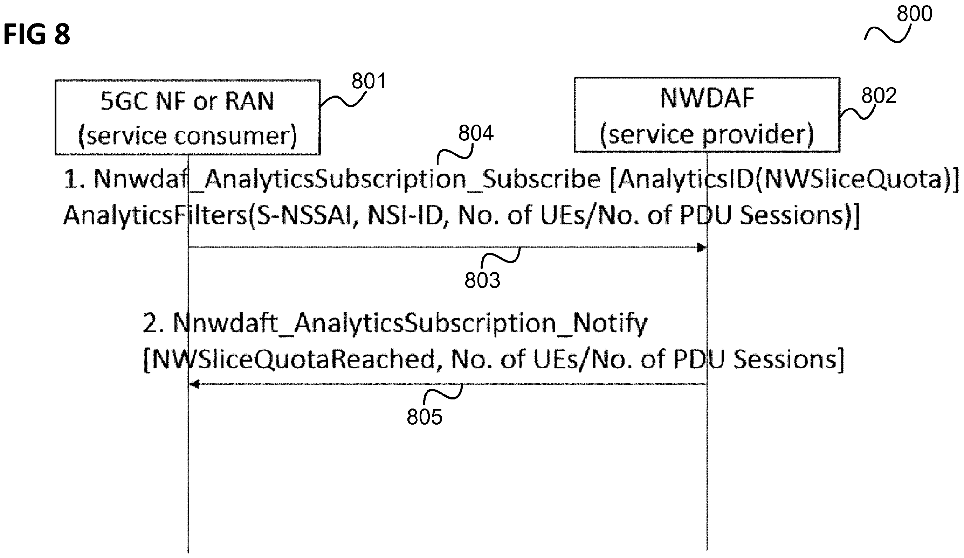

Figure 8 shows a flow diagram 800 illustrating an NWDAF service enhancement to allow subscription for notification when a network slice quota has been reached.

A 5GC network function or RAN component 801, acting as service consumer, and a NWDAF 802, acting as service provider, are involved in the flow.

In 803, the 5GC network function or RAN component 801 sends a subscribe message 804 to the OAM 802 to subscribe to be notified when the network slice quota is reached. It may do that by means of an Nnwdaf_AnalyticsSubscription_Subscribe message, which may include an information element, e.g., the NWSliceQuota or the maximum number of UEs/maximum number of PDU Sessions supported by the network slice is newly introduced for that purpose. Further, the 5GC network function or RAN component 801 may define AnalyticsFilters specifying an S-NSSAI (to identify the network slice for which a notification is requested), optionally an NSI-ID (network slice instance-ID) an information element (e.g. newly introduced for that purpose) which allows the 5GC network function or RAN component 801 to indicate that it wants only to be informed about that the maximum number of UEs has been reached or wants only to be information about that the maximum number of PDU sessions has been reached. In other words, this information element allows indicating to the NWDAF 802 in what the 5GC network function or RAN component 801 is interested. If not indicated, the NWDAF will simply provide the network slice quota information to the 5GC network function or RAN component 801 with an indication that the network slice quota reached is for the case of maximum number of UEs being reached or for the case of maximum number of PDU Session being reached.

In response, in 805, when the network slice quota has been reached, the NWDAF 802 notifies the 5GC network function or RAN component 801 that the network slice quota has been reached and/or that the maximum number of UEs has been reached and/or the maximum number of PDU Sessions has been reached, respectively. The NWDAF 802 may transmit this information by means of an information element newly introduced for that purpose.

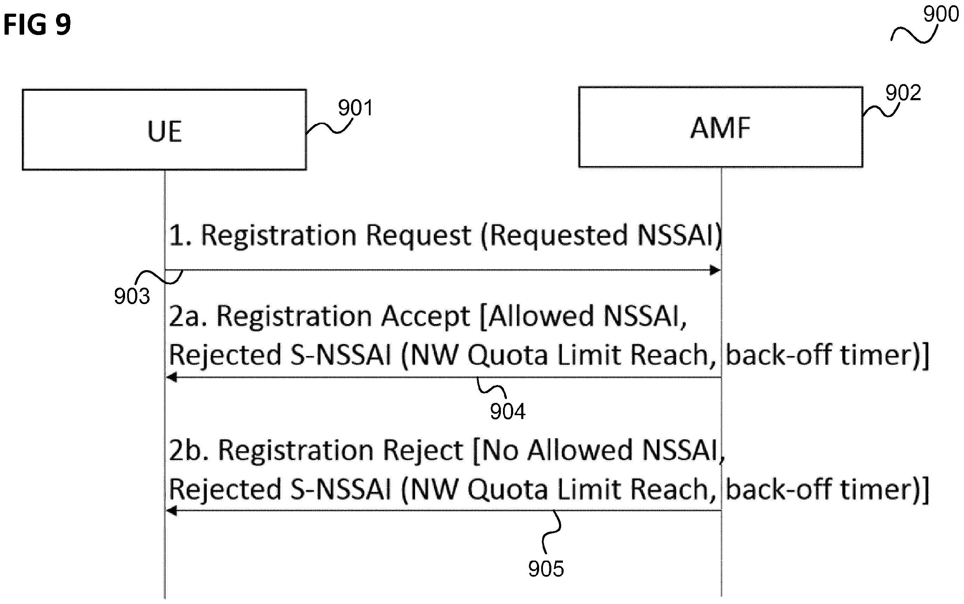

As explained with reference to figure 3, the AMF 309 rejects a registration request when the maximum number of registered UEs has been reached. This is shown in more detail in figure 9.

Figure 9 shows a flow diagram 900 illustrating the usage of a quota limit reach rejection cause for a registration reject message.

A UE 901 and an AMF 902 are involved in the flow.

In 903, the UE 901 sends a registration request with a requested NSSAI to the AMF 902. The requested NSSAI is a list of requested S-NSSAIs. In other words, this registration request may consist of a request to be registered to the network slice and/or to establish a PDU Session for the respective requested network slice(s). It is assumed that the network quota limit regarding the maximum number of UEs in a network slice identified by the NSSAI and/or regarding the maximum number of PDU Sessions already provided in the network slice has been reached. The AMF 902 therefore rejects the registration request for that network slice. It should be noted that registration requests for multiple network slices may be rejected in this manner.

The AMF 902 may respond depending on whether for one or more other network slices (also identified by the NSSAI) registration is allowed.

If registration in one or more other requested network slices is allowed, the AMF 902 sends, in 904, a registration accept (indicating one or more allowed network slices other than the network slice(s) for which registration was rejected).

In addition, the registration accept message includes an indication of the rejected S-NSSAI(s) and may further include a rejection cause value which indicates that the network slice quota (limit) is reached and may include an indication of back-off time. Furthermore, the indication that the network slice quota is reached may be further indicated that due to the maximum number of UEs or due to the maximum number of PDU Sessions already provided in the network slice has been reached. The UE 901 may be configured to only request registration to the network slice(s) for which registration was rejected to the quota limit being reached again when the back-off time has elapsed.

If registration for none of the other requested network slices is allowed, the AMF 902 sends, in 905, a registration rejection message which includes an indication of the rejected S-NSSAI(s) and may further include a rejection cause value which indicates that the network slice quota (limit) is reached and may include an indication of back-off time. The UE 901 may be configured to only request registration to a network slice for which registration was rejected due to the quota limit being reached again when the back-off time has elapsed.

It should be noted that the UE 901 may get a message from the core network/radio access network that the network slice quota is not reached anymore during the back-off time is running. This enables the UE to send the registration request again to the network.

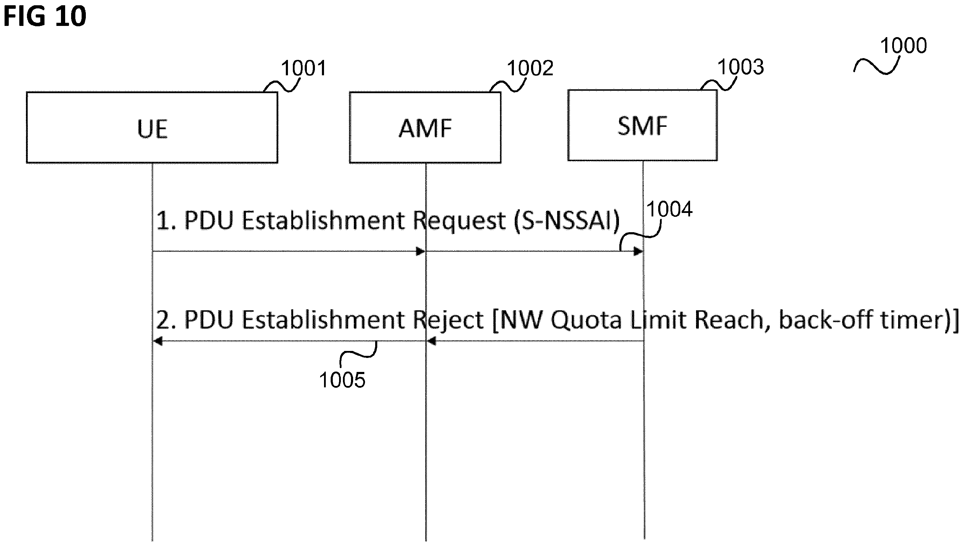

As explained with reference to figure 4, the SMF 412 rejects a PDU establishment request when the maximum number of PDU sessions has been reached. This is shown in more detail in figure 10.

Figure 10 shows a flow diagram 1000 illustrating the usage of a quota limit reach rejection cause for a PDU Session establishment reject message.

A UE 1001, an AMF 1002 and an SMF 1003 are involved in the flow.

In 1004, the UE 1001 sends a PDU establishment request to the SMF 1003 via the AMF 1002 indicating the S-NSSAI of a network slice by means of which a PDU session should be provided.

It is assumed that the maximum number of PDU sessions for that network slice has been reached. Therefore, in 1005, the SMF 1003 sends a PDU establishment rejection via the AMF 1002 to the UE 1001.

The PDU Session establishment rejection may include a rejection cause value which indicates that the network slice quota or the maximum number of PDU Sessions that the network slice can provide is reached and may include an indication of back-off time. The UE 1001 may be configured to only request a PDU session provided by means the network slice again when the back-off time has elapsed.

It should be noted that the UE 1001 may get a message from the core network/radio access network that the network slice quota is not reached anymore during the back-off time is running. This enables the UE to send the PDU Session Establishment request again to the network.

It should be noted that when two UEs access the same network slice but via different AMFs simultaneously, a "racing issue" may arise, namely when the registration of one of the UEs for one of the UEs leads to the quota being reached and thus a registration for the other UE should be rejected.

According to one embodiment, this issue is addressed by that the PCF acquires information (by subscription or request) from the NWDAF about the network slice quota being reached before a response is sent to the UE, e.g. before the AMF returns a Registration Accept message to the UE.

It should be noted that the NWDAF may further indicate to the PCF whether the maximum number of UEs and/or the maximum number of PDU Sessions that the network could support is reached. This enables the PCF to further indicate other 5GC Network Functions such as the AMF or the SMF whenever there is a new Registration Request or a new PDU Session Establishment Request being sent by the UE to be registered for the network slice or to establish a new PDU Sessions to the network slice that already reaches its network slice quota.

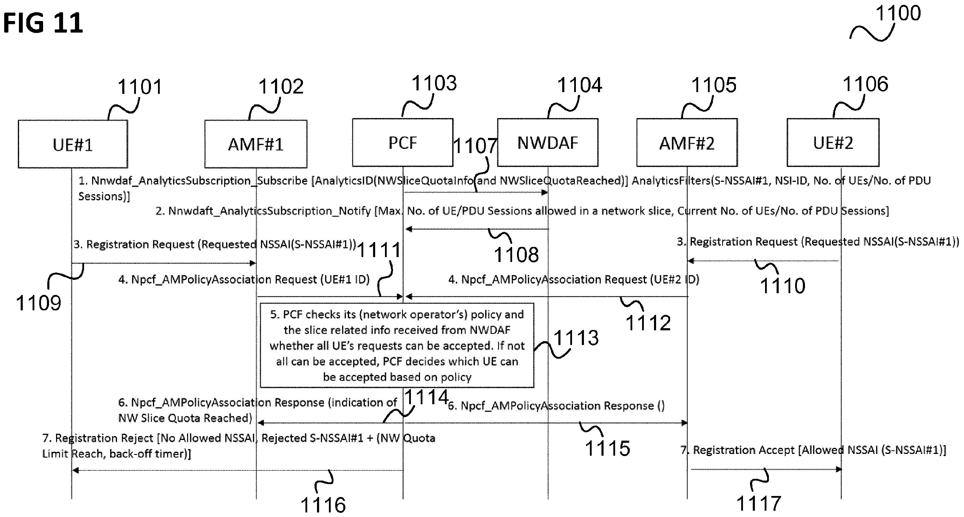

Figure 11 shows a flow diagram 1100 illustrating addressing a racing issue in case of two UEs requesting registration via different AMFs.

A first UE 1101, a first AMF 1101, a PCF 1103, a NWDAF 1104, a second AMF 1105 and a second UE 1106 are involved in the flow. For example, the UEs 1101, 1106 may correspond to two additional UEs like the additional UE 308 in figure 3 and the AMFs 1102, 1105 may correspond to two different AMFs like the AMF 309 of figure 3. The PCF 1103 may correspond to PCF 310 and the NWDAF 1104 may correspond to NWDAF 310.

In 1107 the PCF 1103 subscribes for information about the network slice quota (e.g. of network slice 303) and notification when the network slice quota has been reached at the NWDAF 1104, similarly as described with reference to figure 8.

In 1108, the NWDAF 1104 informs the PCF 1103 about the maximum number of UEs and/or PDU sessions allowed in the network slice and the current number of UEs and/or PDU sessions for the network slice.

It is assumed that in 1109, the first UE 1101 sends a registration request to the first AMF 1102 and in 1110, substantially at the same time (before the registration request by the first UE 1101 has been handled), the second UE 1106 sends a registration request to the second AMF 1105.

In 1111 and 1112, respectively, the AMFs 1101, 1105 send an AM policy association request to the PCF 1103, specifying the first UE 1101 and the second UE 1106, respectively.

In 1113, the PCF 1103 checks its (network operator's) policy and the slice related information received from NWDAF 1104 whether all UE's requests can be accepted. If not all can be accepted, the 1103 PCF decides which UE's request can be accepted based on the (operator) policy/local configuration that is available at the PCF.

In this example, it is assumed that not both UE's requests can be accepted and that the PCF 1103 decides that the request of the first UE 1101 should be rejected.

Accordingly, in 1114 and 1115, respectively, the PCF 1103 sends an AM policy association response to each of the AMFs 1102, 1105, wherein it indicates to the first AMF 1102 that the network slice quota has been reached. The first AMF 1102 therefore, in 1116, rejects the registration to the network slice by the first UE 1101, e.g. as described with reference to figure 9. In contrast, the second AMF 1105 accepts the registration to the network slice by the second UE 1106 in 1117.

Thus, it may be desirable that a PCF 311, 411 knows that a network slice quota has been reached. This is because while even in one network, there may be multiple PCFs deployed, the information available for those PCFs is typically synchronized. In contrast, in one network slice, there may be multiple AMF instances but the information used for making any decisions is typically not synchronized among them.

In addition to the racing situation as depicted in Figure 11, the similar racing situation but for the case of multiple PDU Session establishment requests are being sent by different UEs to different SMFs at the same time might also happen. In this case, the PCF checks its (network operator's) policy and the slice related information received from NWDAF 1104 whether all UE's PDU Session Establishment requests can be accepted. If not all can be accepted, the 1103 PCF decides which UE's request can be accepted based on the (operator) policy/local configuration, which is available at the PCF.

In the following, examples are described about how an NWDAF 310, 410 may collect information from a NF in 5GC or from OAM to know about the current number of UEs registered in a network slice or the current number of PDU Sessions provided in the network slice.

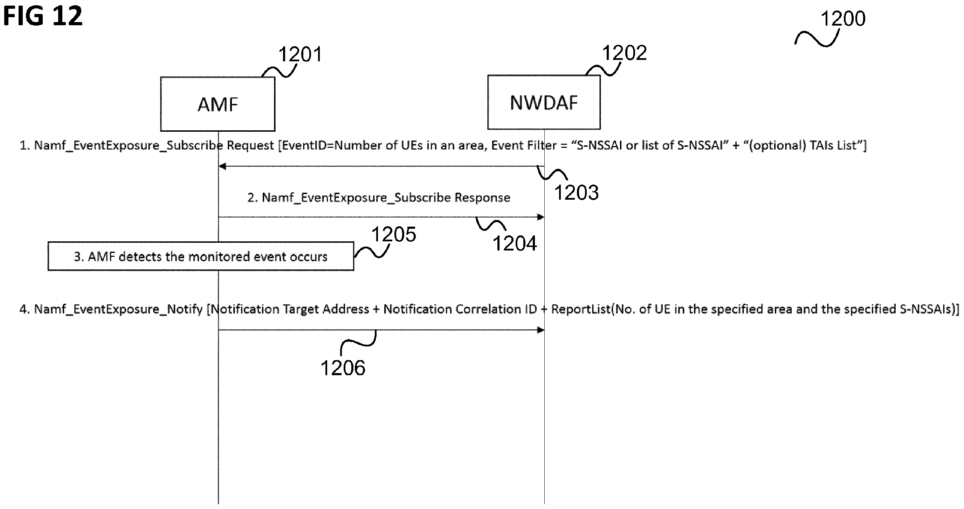

Figure 12 shows a flow diagram 1200 illustrating an example of an NWDAF collecting information from an AMF to know about the current number of UEs registered in a particular network slice (or particular network slices) in a specified area.

It should be noted that so that the NWDAF would know the total number of UEs being served by a network slice, it is assumed that the NWDAF knows in advance which AMFs are involved and in addition know which AMF is serving which area covered by the network slice. Having collecting information from all AMFs involved in the network slice about the number of UEs successfully registered to the network slice would lead to the total number of UEs being served by the network slice.

An AMF 1201 and an NWDAF 1202 are involved in the flow.

In 1203, the NWDAF 1202 sends a subscribe request to the AMF 1201 to be informed about the number of UEs registered in an area and, for each of one or more network slices, the number of UEs registered in the network slice. The NWDAF 1202 may specify the one or more network slices by an S-NSSAI or a list of S-NSSAIs. The request may further optionally include a list of tracking area identifiers (for specifying an area) or a list of registration areas or a list of geographical area.

In 1204, the AMF 1201 acknowledges the subscription (and may notify the NWDAF about a current number of UEs present in the area and the number of UEs registered for each of the one or more network slices).

In 1205, the AMF 1201 detects that the number of UE present in the area and/or registered in the one or more network slices has changed and therefore, in 1206, informs the NWDAF 1202 about the changed number of UEs present in the area and the number of UEs registered for each of the one or more network slices.

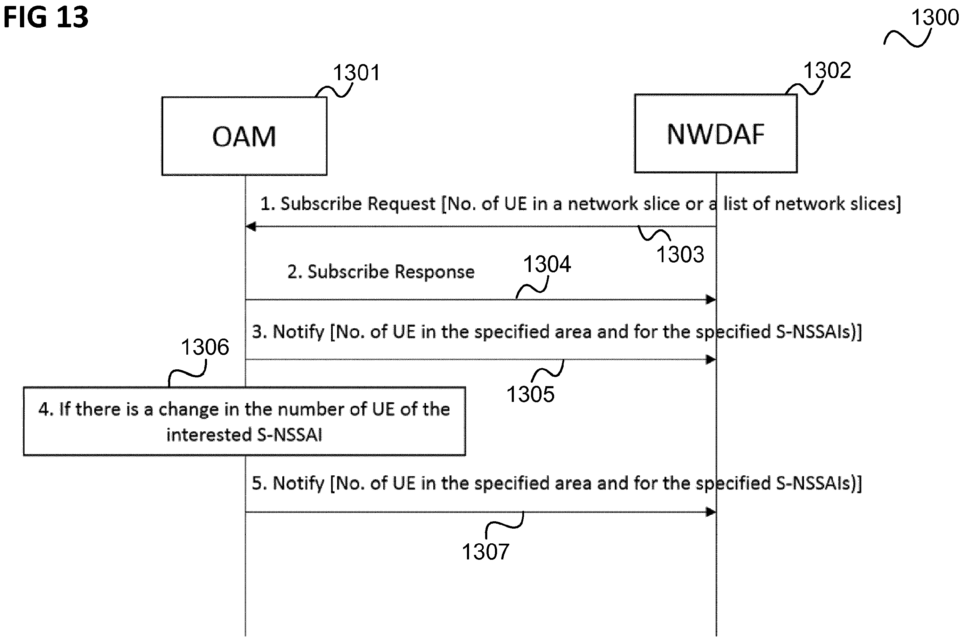

Figure 13 shows a flow diagram 1300 illustrating an example of an NWDAF collecting information from an OAM to know about the current number of UEs for one or more particular network slices in the whole PLMN.

The assumption here is that the OAM has collected the information of current number of UEs being registered or served by the network slice, e.g., via communicating with the AMFs in the network slice.

An OAM 1301 and an NWDAF 1302 are involved in the flow.

In 1303, the NWDAF 1302 sends a subscribe request to the OAM 1301 to be informed about the number of UEs registered in one or more network slices (which it may specify by means of a list of one or more network slices, e.g. a list of S-NSSAIs).

In 1304, the OAM 1301 acknowledges the subscription.

In 1305, the OAM 1301 notifies the NWDAF about the number of UEs registered in the one or more network slices. If there is a change of the number of UEs in the one or more network slices in 1306, the OAM 1301 notifies the NWDAF about the changed number of UEs registered in the one or more network slices in 1307.

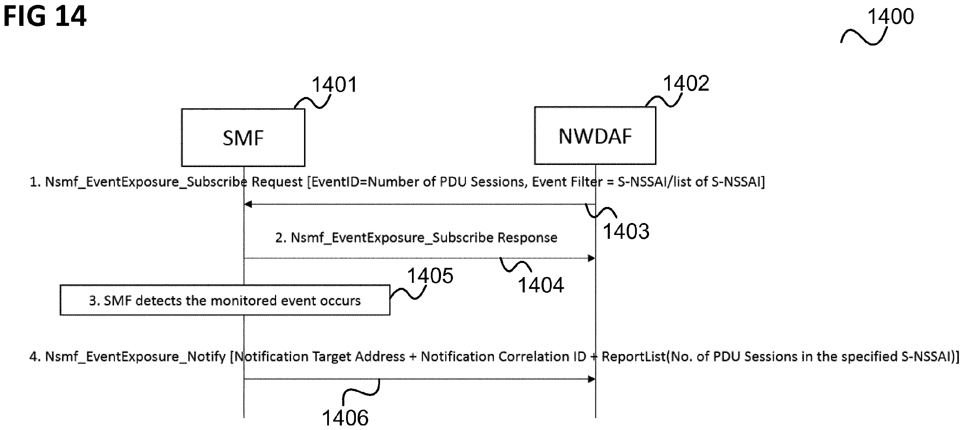

Figure 14 shows a flow diagram 1400 illustrating an example of an NWDAF collecting information from an SMF to know about the current number of PDU sessions provided by means of a particular network slice (or particular network slices).

It should be noted that so that the NWDAF would know the total number of PDU Sessions being served by a network slice, it is assumed that the NWDAF knows in advance which SMFs are involved in the network slice. Having collecting information from all SMFs involved in the network slice about the number of UEs successfully established a PDU Session in the network slice would lead to the total number of PDU Sessions being served by the network slice.

An SMF 1401 and an NWDAF 1402 are involved in the flow.

In 1403, the NWDAF 1402 sends a subscribe request to the SMF 1401 to be informed about the number of PDU sessions provided by each network slice of one or more network slices which it specifies by an S-NSSAI or a list of S-NSSAIs.

In 1404, the SMF 1401 acknowledges the subscription (and may notify the NWDAF 1402 about a current number of PDU sessions provided for each of the one or more network slices).

In 1405, the SMF 1401 detects that the number of PDU sessions provided by the one or more network slices has changed and therefore, in 1406, informs the NWDAF 1402 about the changed number of PDU sessions provided for each of the one or more network slices.

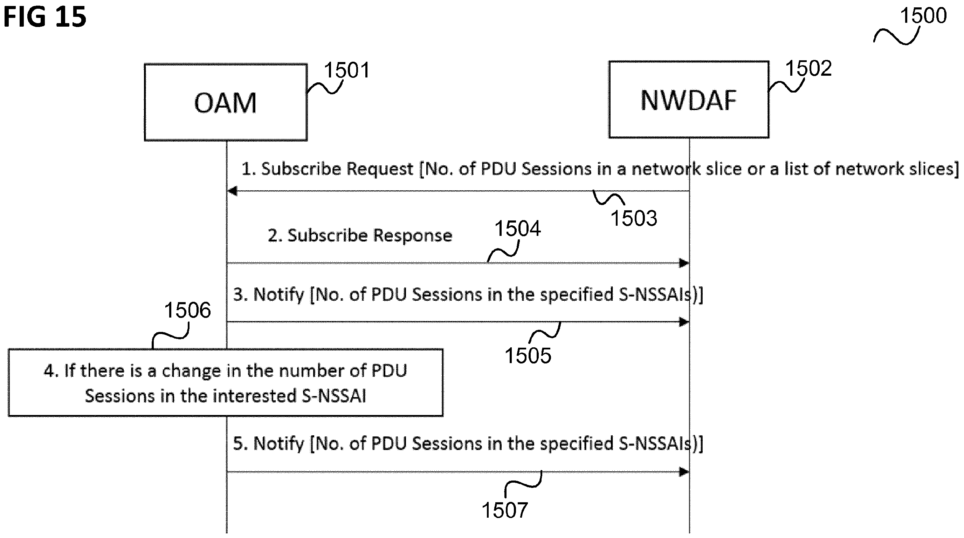

Figure 15 shows a flow diagram 1500 illustrating an example of an NWDAF collecting information from an OAM to know about the current number of PDU sessions provided by one or more particular network slices in the whole PLMN.

The assumption here is that the OAM has collected the information of current number of PDU Sessions supported by the network slice, e.g., via communicating with the SMFs in the network slice.

An OAM 1501 and an NWDAF 1502 are involved in the flow.

In 1503, the NWDAF 1502 sends a subscribe request to the OAM 1501 to be informed, for each of one or more network slices (which it may specify by means of a list of one or more network slices, e.g. a list of S-NSSAIs), about the number of PDU sessions provided in the network slice.

In 1504, the OAM 1501 acknowledges the subscription.

In 1505, the OAM 1501 notifies the NWDAF 1502 about, for each of one or more network slices, the number of PDU sessions provided in the network slices.

If there is a change of the number of PDU sessions provided by the one or more network slices in 1506, the OAM 1501 notifies the NWDAF 1502 about, for each of one or more network slices, the number of PDU sessions provided in the network slices in 1507.

According to the examples of figures 12 and 14, instead of letting the OAM provide the current number of registered UEs or PDU sessions to the NWDAF (or to 5GC network functions), the NWDAF may collect the information directly from 5GC NFs: it may collect from an AMF of a core network slice (identified by an S-NSSAI) the number of UEs which are successfully registered via an AMF and/or it may collect from an SMF of a core network slice (identified by an S-NSSAI) the number of PDU Sessions which are successfully established via the SMF

It should be noted that while in the examples of figures 12 to 15, information for checking whether a quota is reached is gathered by the NWDAF, this may also be performed by other components, like the OAM or also a PCF. For example, a PCF may make use of the policy control request (PCR) trigger "Change of UE presence in the Presence Reporting Area" according to which an AMF interacts again with the PCF after the AM Policy Association Establishment or UE Policy Association Establishment. This triggers when the UE is entering or leaving a presence reporting area. The PCF may thus monitor UE presence, for example.

Another possibility is that a component providing secondary authentication and authorization (i.e. slice specific authentication and authorization) subscribes to be notified when the NW slice quota limit has been reached either directly to NWDAF or to the OAM. In case the slice specific authentication and authorization is owned by the 3^{rd} party, which is not the network operator PLMN, the slice specific authentication and authorization may subscribe to be notified when the NW slice quota limit has been reached via a Network Exposure Function (NEF) which then further subscribe this information of network slice quota reached to the NWDAF or to the OAM. After the slice specific authentication and authorization is informed about the network slice quota has been reached, it may not authorize the UE depending on whether the quota has been reached and the allowed NSSAI may be set (or updated) accordingly.

Further, an Application Function (AF) may subscribe to NWDAF regarding the NW Slice Quota Reach Event or regarding the number of current UEs/current PDU Sessions supported by the network slice directly to the NWDAF or via a Network Exposure Function (NEF), which then further subscribe to the NWDAF.

Although in the embodiments described above and the corresponding figures a single network slice is provided by the RAN and/or the CN part of mobile communication network, it is also possible that the RAN and the CN may serve more than one network slices, or even there may be plurality of RANs that are serving the same network slice.

The embodiments described above address the case that the additional UE 208 sends a request 210 to access the network slice 203 to a PLMN which includes the network slice 203. However, the UE 208 may also send a request to a visited PLMN (V-PLMN) and the network slice 203 may be part of the UE's home PLMN (H-PLMN).

Accordingly, in the following, embodiments are described providing a mechanism for a mobile communication system (e.g. a 5GS) to enforce network slice related quota handling in a roaming scenario, e.g., to ensure that a maximum number of UEs and/or a maximum number of PDU Sessions in a network slice is kept within a network slice quota across PLMNs.

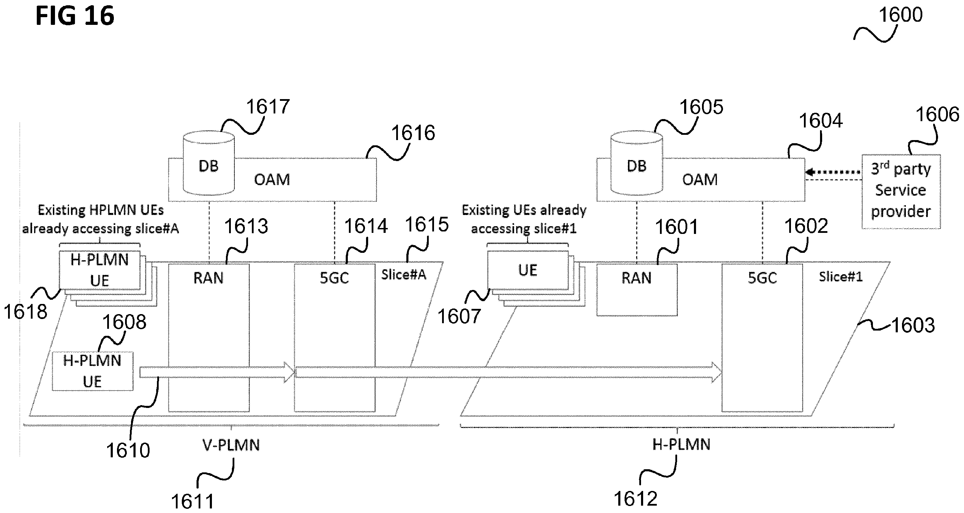

Figure 16 shows a radio communication system 1600 having network slice quota in a roaming scenario.

The radio communication system comprises a V-PLMN 1611 and a H-PLMN 1612. Similarly to the radio communication system 200 of figure 2, the H-PLMN 1612 comprises a H-PLMN RAN 1601, e.g. corresponding to RAN 103, a H-PLMN 5G core network (5GC) 1602, e.g. corresponding to 5GC 118 which includes a H-PLMN (core) network slice 1603, e.g. corresponding to one of the network slices 106, 107 and an H-PLMN OAM 1604, e.g. corresponding to OAM 116. It should be noted that there may also be a plurality of H-PLMN RANs 1601 providing radio access to the network slice 1603.

The H-PLMN OAM 1604 has a H-PLMN database 1605 (e.g. a storage or memory) which stores one or more quota for the H-PLMN network slice 1603, e.g. the maximum number of UEs and/or the maximum number of PDU Session supported by (or allowed for) the network slice by the H-PLMN network slice 1603.

Optionally, the quota may be based on a request by a 3^{rd} party service provider 1606 which requests the operator of the H-PLMN 1612 to limit a number of UEs and/or a number of PDU Sessions for the H-PLMN network slice 1603.

It is assumed that a plurality of non-roaming UEs 1607 are already accessing the H-PLMN network slice 1603 (i.e. are registered with the H-PLMN network slice 1603 and/or have PDU sessions by means of the H-PLMN network slice 1603).

Similarly to the H-PLMN 1612, the V-PLMN 1611 comprises a V-PLMN RAN 1613, e.g. corresponding to RAN 103, a V-PLMN 5G core network (5GC) 1614, e.g. corresponding to 5GC 118 which includes a V-PLMN (core) network slice 1615, e.g. corresponding to one of the network slices 106, 107 and a V-PLMN OAM 1616, e.g. corresponding to OAM 116. It should be noted that there may also be a plurality of V-PLMN RANs 1613 providing radio access to the V-PLMN network slice 1615.

The V-PLMN OAM 1616 has a V-PLMN database 1617 (e.g. a storage or memory).

It is assumed that a plurality of roaming UEs 1618 are accessing the V-PLMN network slice 1615 (i.e. are registered with the V-PLMN network slice 1615 and/or have PDU sessions by means of the V-PLMN network slice 1615). The home network of the roaming UEs 1618 is the H-PLMN 1612.

The V-PLMN 1611 provides the roaming UEs 1618 with access to the H-PLMN network slice 203 via the V-PLMN network slice 1618. The V-PLMN network slice 1618 can thus be seen as the H-PLMN network slice 1603 deployed in the in V-PLMN 1611 or as mapping to the H-PLMN network slice 1603. For the latter case, the mapping can be done for example by mapping the network slice identifier in the H-PLMN to the network slice identifier in the V-PLMN, i.e. mapping of S-NSSAI in H-PLMN to the S-NSSAI in V-PLMN. However, it should be noted that the V-PLMN network slice 1618 may be shared among multiple H-PLMNs and/or H-PLMN network slices.

It is assumed that an additional UE 1608 sends a request 1610 to access the V-PLMN core network slice 1615 (i.e. to register with the V-PLMN core network slice 1615 or to have a PDU session by means of the V-PLMN core network slice 1615). However, since this would imply a registration with the H-PLMN core network slice 1603 or a PDU session in the H-PLMN core network slice 1603 it may occur that the request should not be granted because it would violate the quota for the H-PLMN core network slice 1603.

In the following, embodiments are described for supporting network slice related quota enforcement (regarding the maximum number of registered UEs and/or the maximum number of PDU Sessions) in a roaming scenario as in figure 16. It should be noted that the following examples are mainly described for the registration case. They may be adapted to the PDU session case analogoulsy as the embodiments described above (for the non-roaming case), as described with reference to figures 3 to 15.

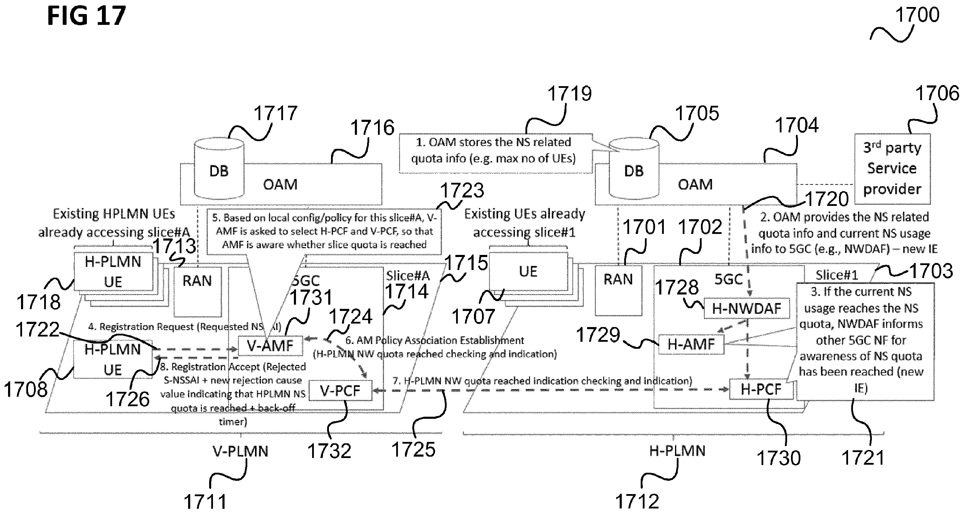

Figure 17 illustrates the handling of a network slice quota regarding the maximum number of UEs allowed to be registered to a network slice of a radio communication system 1700 in a roaming scenario.

The radio communication system 1700 comprises a V-PLMN 1711 and a H-PLMN 1712 having the components as described for the V-PLMN 1611 and the H-PLMN 1612 of figure 16.

In this example the network slice quota is assumed to limit the maximum number of UEs allowed to be registered with the H-PLMN network slice 1703. Accordingly, in 1719, the H-PLMN OAM 1704 stores in its H-PLMN database 1705, the related quota information which includes in this case the maximum number of UEs.

In 1720, e.g. on a regular basis (e.g., event based subscription/notification) or on an on-demand basis (e.g., via a request/response approach), the H-PLMN OAM 1704 provides the related (network slice) quota information and the information about the current usage of the H-PLMN network slice 1703 to the H-PLMN 5GC 1702, e.g. to a H-PLMN NWDAF (Network Data Analytics Function) 1728 of the H-PLMN 5GC 1702, e.g. corresponding to NWDAF 117 of figure 1. The H-PLMN OAM 1704 may for example provide this information to the H-PLMN NWDAF 1728 by means of an information element (IE) newly introduced for that purpose. Alternatively, the H-PLMN NWDAF may collect the information about the current usage of the H-PLMN network slice 1703 from the other H-PLMN 5GC network functions, e.g., AMF in H-PLMN or SMF in H-PLMN for the number of UEs being registered in the network slice 1703 or for the number of PDU Sessions being established in the network slice 1703 similar to the procedure as depicted in Figure 12 and Figure 14 respectively.

In 1721, if the current usage of the H-PLMN network slice 1703 reaches the network slice quota, the H-PLMN NWDAF 1728 informs other H-PLMN 5GC network functions such that they are aware that the network slice quota has been reached. This may be performed by an information element (IE) newly introduced for that purpose. For example, the H-PLMN NWDAF 1728 may inform an H-PLMN AMF 1729 in this manner and/or may inform a H-PLMN PCF 1730.

As in the example of figure 16, it is assumed that in 1722, an additional roaming UE 1708 sends a registration request with a Requested NSSAI specifying the H-PLMN network slice. The request is received by a V-PLMN AMF 1730 of the V-PLMN 1711.

In 1723, based on a local configuration and/or policy for the V-PLMN network slice 1715, the V-PLMN AMF 1731 determines that it should check whether a slice quota is reached. For this, it is to select (and e.g. contact) the H-PCF 1730 and a V-PLMN PCF 1732.

In 1724 and 1725, the V-PLMN AMF 1731 checks, via the V-PLMN PCF 1732 with the H-PLMN PCF 1730 whether the H-PLMN network slice quota has been reached and the H-PLMN PCF 1730 provides an indication to the V-PLMN PCF 1732 that the H-PLMN slice quota has been reached which is then further forwarded to the V-PLMN AMF 1731.

In 1726, the V-PLMN AMF can react accordingly, e.g., by sending Rejected S-NSSAI with a cause value of "H-PLMN NW Slice Quota Reached".

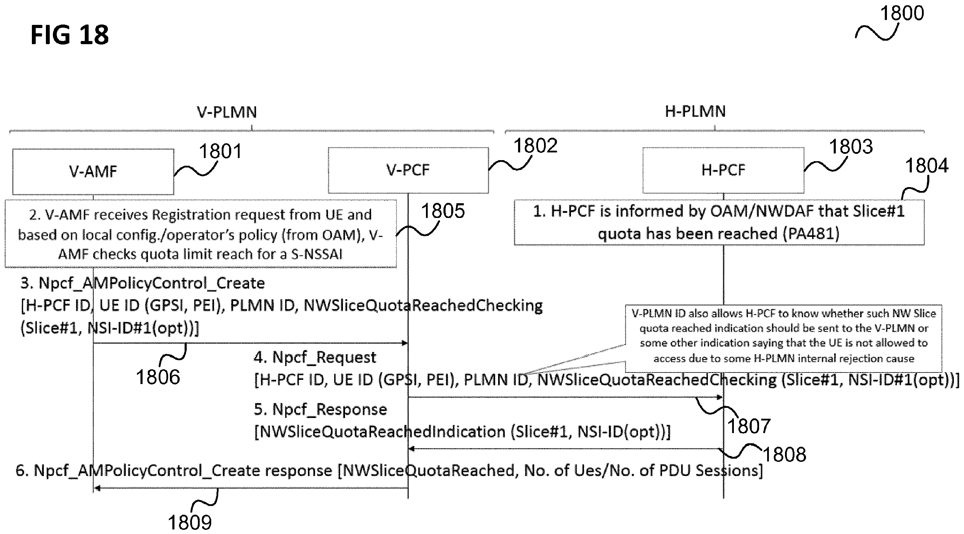

Figure 18 shows a flow diagram 1800 illustrating a PCF service enhancement to support the indication of network slice quota having been reached according to a first variant.

A V-PLMN AMF 1801, e.g. corresponding to V-PLMN AMF 1731, a V-PLMN PCF 1802, e.g. corresponding to V-PLMN PCF 1732, and a H-PLMN PCF 1803, e.g. corresponding to H-PLMN PCF 1730, are involved in the flow.

In 1804, the H-PLMN PCF 1803 is informed by an OAM or NWDAF that the quota for a network slice (e.g. H-PLMN network slice 1703) has been reached. This may happen as described in embodiments above (e.g. as in the non-roaming case).

In 1805, corresponding to 1722 of figure 17, the V-PLMN AMF 1801 receives a registration request from a UE for an S-NSSAI (i.e. for a network slice). Based on local configuration and/or operator's policy (e.g. provided by the V-PLMN OAM), the V-PLMN AMF 1801 determines that it is to check whether a quota limit has been reached for the S-NSSAI.

For this, in 1806, it sends an Npcf_AMPolicy Control_Create message to the V-PLMN PCF 1802 which in turn sends, in 1807, an Npcf_request message to the H-PLMN PCF 1803.

The Npcf_request message includes an ID of the V-PLMN which allows the H-PLMN PCF 1803 to know whether the requested NW Slice quota reached indication (i.e. the indication whether the quota has been reached) should be sent to the V-PLMN or some other indication saying that the UE is not allowed to access due to some H-PLMN internal rejection cause.

In 1808, the H-PLMN PCF 1803 responds by means of an Npcf_response message indicating whether the network slice quota has been reached. In 1809, the V-PLMN PCF 1802 responds accordingly to the V-PLMN AMF 1801.

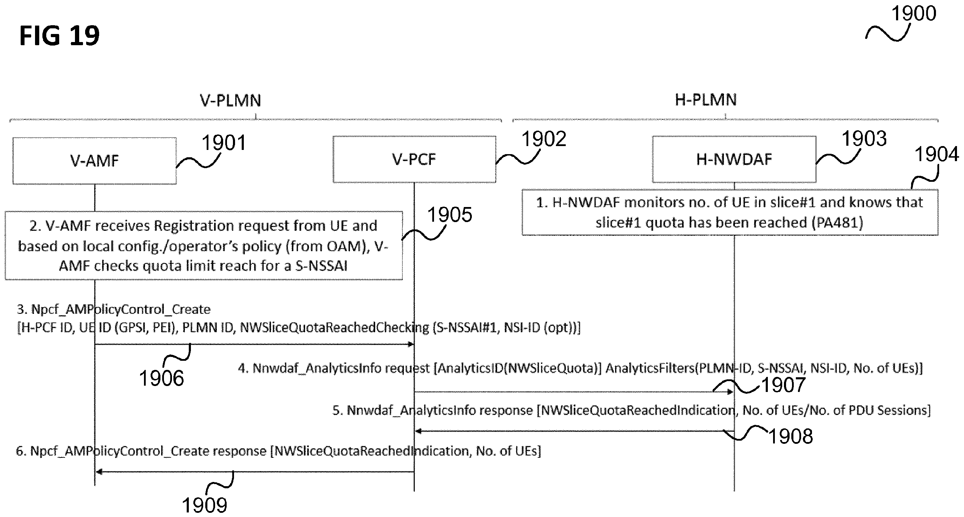

Figure 19 shows a flow diagram 1900 illustrating PCF and NWDAF service enhancement to support the indication of network slice quota having been reached according to a second variant.

A V-PLMN AMF 1901, e.g. corresponding to V-PLMN AMF 1731, a V-PLMN PCF 1902, e.g. corresponding to V-PLMN PCF 1732, and a H-PLMN NWDAF 1903, e.g. corresponding to H-PLMN NWDAF 1728 are involved in the flow.

In 1904, the H-PLMN NWDAF 1903 monitors the number of the UEs in a network slice (e.g. H-PLMN network slice 1703) and knows whether a quota for the network slice has been reached.

In 1905, corresponding to 1722 of figure 17, the V-PLMN AMF 1731 receives a registration request from a UE for an S-NSSAI (i.e. for a network slice). Based on local configuration and/or operator's policy (e.g. provided by the V-PLMN OAM), the V-PLMN AMF 1901 determines that it is to check whether a quota limit has been reached for the S-NSSAI.

For this, in 1906, it sends an Npcf_AMPolicy Control_Create message to the V-PLMN PCF 1902 which in turn sends, in 1907, an Nnwdaf AnalyticsInfo request message to the H-PLMN NWDAF 1903. It should be noted that in contrast to figure 17, the V-PLMN PCF 1902 does not contact the H-PLMN PCF 1903 (as in 1726) but contacts the H-PLMN NWDAF 1903 in this variant.

In 1908, the H-PLMN NWDAF 1903 responds by means of an Nnwdaf AnalyticsInfo response message indicating whether the network slice quota has been reached. In 1909, the V-PLMN PCF 1902 responds accordingly to the V-PLMN AMF 1901.

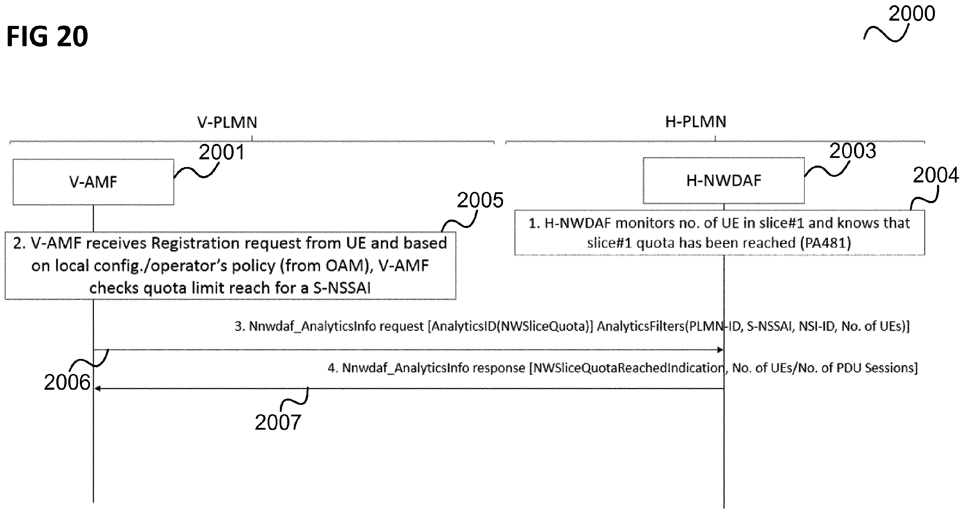

Figure 20 shows a flow diagram 2000 illustrating a NWDAF service enhancement to support the indication of network slice quota having been reached according to a third variant.

A V-PLMN AMF 2001, e.g. corresponding to V-PLMN AMF 1731 and a H-PLMN NWDAF 2003, e.g. corresponding to H-PLMN NWDAF 1728 are involved in the flow.

In 2004, the H-PLMN NWDAF 2003 monitors the number of the UEs in a network slice (e.g. H-PLMN network slice 1703) and knows whether a quota for the network slice has been reached.

In 2005, corresponding to 1722 of figure 17, the V-PLMN AMF 2001 receives a registration request from a UE for an S-NSSAI (i.e. for a network slice). Based on local configuration and/or operator's policy (e.g. provided by the V-PLMN OAM), the V-PLMN AMF 2001 determines that it is to check whether a quota limit has been reached for the S-NSSAI.

For this, in 2006, it sends an Nnwdaf AnalyticsInfo request message to the H-PLMN NWDAF 2003. It should be noted that in contrast to figure 17, the V-PLMN AMF 2001 directly contacts the H-PLMN NWDAF 2003 in this variant.

In 2007, the H-PLMN NWDAF 2003 responds by means of an Nnwdaf AnalyticsInfo response message indicating whether the network slice quota has been reached.

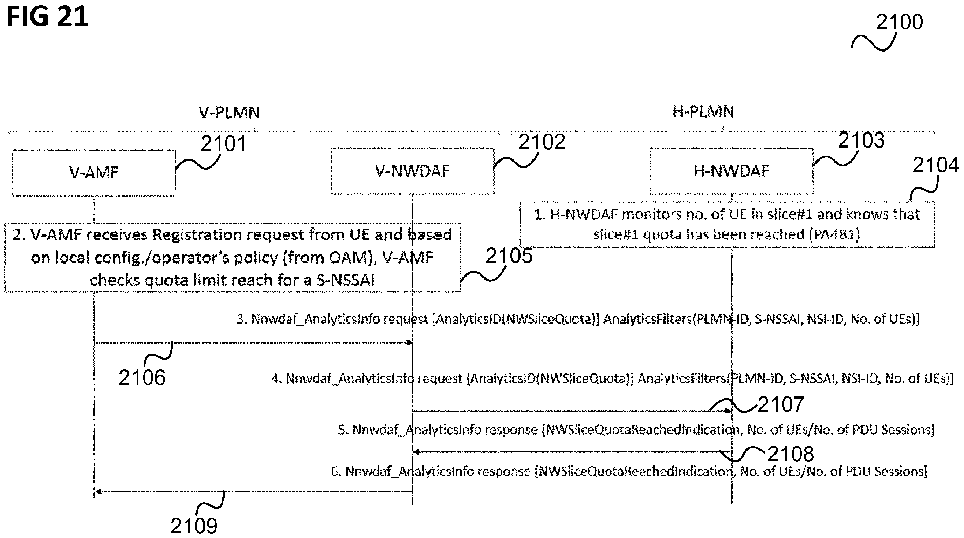

Figure 21 shows a flow diagram 2100 illustrating NWDAF service enhancements to support the indication of network slice quota having been reached according to a fourth variant.

A V-PLMN AMF 2101, e.g. corresponding to V-PLMN AMF 1731, a V-NWDAF 2102, e.g. corresponding to an NWDAF of the V-PLMN 1714 and a H-PLMN NWDAF 2103, e.g. corresponding to H-PLMN NWDAF 1728 are involved in the flow.

In 2104, the H-PLMN NWDAF 2103 monitors the number of the UEs in a network slice (e.g. H-PLMN network slice 1703) and knows whether a quota for the network slice has been reached.

In 2105, corresponding to 1722 of figure 17, the V-PLMN AMF 2101 receives a registration request from a UE for an S-NSSAI (i.e. for a network slice). Based on local configuration and/or operator's policy (e.g. provided by the V-PLMN OAM), the V-PLMN AMF 2101 determines that it is to check whether a quota limit has been reached for the S-NSSAI.

For this, in 2106, it sends an Nnwdaf AnalyticsInfo request message to the V-PLMN NWDAF 2102. It should be noted that in contrast to figure 17, the V-PLMN AMF 2101 contacts the V-PLMN NWDAF 2102 in this variant.

In 2107, the V-PLMN NWDAF 2102 in turn sends an Nnwdaf AnalyticsInfo request message to the H-PLMN NWDAF 2103.

In 2108, the H-PLMN NWDAF 2103 responds by means of an Nnwdaf AnalyticsInfo response message indicating whether the network slice quota has been reached.

In turn, in 2109, the V-PLMN NWDAF 2102 responds to the V-PLMN AMF 2101 by means of an Nnwdaf AnalyticsInfo response message indicating whether the network slice quota has been reached.

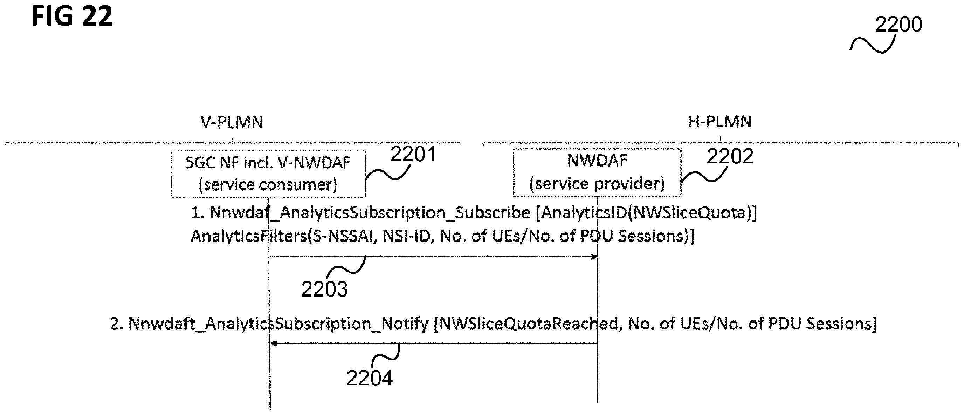

Rather than using a request/response mechanism, the V-PLMN NWDAF 2102 may also acquire information whether the network quota has been reached by means of a subscription as illustrated in figure 22.

Figure 22 shows a flow diagram 2200 illustrating an NWDAF service enhancement to support an indication of network slice quota having been reached across PLMNs.

A V-PLMN NWDAF 2201 (or generally a NGC network function) and a H-PLMN NWDAF 2202 are involved in the flow.

In 2203, the V-PLMN NWDAF 2201 sends an Nnwdaf_AnalyticsSubscription_Subscribe message to the H-PLMN NWDAF 2202 to request being notified if a network slice quota relating to the maximum number of UEs or the relating to the maximum number of PDU sessions has been reached. This means that the V-NWDAF 2201 (or generally a 5GC NF in V-PLMN (e.g. a V-PLMN PCF or a V-PLMN AMF)) subscribes to the NW Slice Quota Reached Event from the H-PLMN NWDAF 2202.

In 2204, if the network slice quota has been reached the H-PLMN NWDAF 2202 notifies the V-PLMN NWDAF 2201 by means of an Nnwdaf_AnalyticsSubscription_Notify message.

When the a network slice quota has been reached, the V-PLMN AMF 1731 may respond (in 1726) to the request of the additional UE 1708 similarly as the AMF 409 responds in the non-roaming case with a registration accept or registration reject (optionally with a back-off timer) as described with reference to figure 9 for the registration case or a PDU establishment reject (optionally with a back-off timer) as described with reference to figure 10.

Instead of the NW Quota Limit Reach as Rejection Cause, the AMF may include another Rejection Cause for Registration Reject message for avoiding delay in responding the Registration Accept to the UE. Namely, when the V-PLMN AMF 1732 has not yet received information from the H-PLMN whether the quota has been reached, it may include a rejection cause "NW Slice Quota Limit Reach checking" such that the registration accept (or reject) message is not delayed due to the checking of the quota with the H-PLMN.

This means that if the information whether the quota has been reached is not yet available at the V-PLMN AMF 1732, the V-PLMN AMF 1731 may send a registration accept (or reject) to the UE with the "Rejected S-NSSAI" indicating that "NW Slice Quota Reached Checking" is pending. Alternatively, the V-PLMN AMF may provide an empty Allowed NSSAI in the Registration Accept being sent to the UE, so that the UE is registered in the V-PLMN but shall wait for the completion of the checking of whether the quota has been reached. In this case, the UE will not attempt to use any service provided by the V-PLMN except emergency services. This alternative of providing an empty Allowed NSSAI is also applicable for the non-roaming scenario.

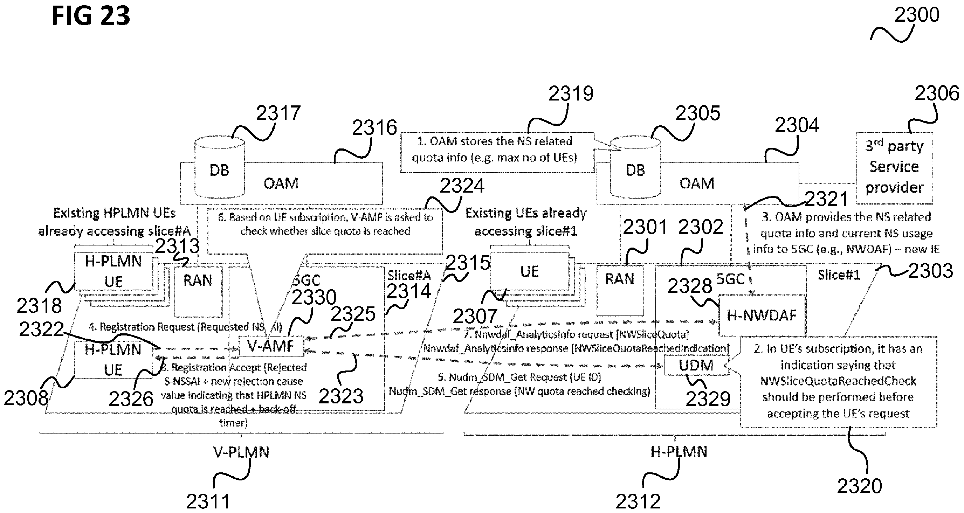

Figure 23 illustrates the handling of a network slice quota regarding the maximum number of UEs allowed to be registered to a network slice of a radio communication system 2300 in a roaming scenario according to another embodiment.

Similarly to the radio communication 1700 of figure 17, the radio communication system 2300 comprises a V-PLMN 2311 and a H-PLMN 2312 having the components as described for the V-PLMN 1611 and the H-PLMN 1612 of figure 16.

In this example the network slice quota is assumed to limit the maximum number of UEs allowed to be registered with the H-PLMN network slice 2303. Accordingly, in 2319, the H-PLMN OAM 2304 stores in its H-PLMN database 2305 the related quota information which includes in this case the maximum number of UEs.

In this embodiment, in 2320, a UDM 2329 of the H-PLMN 2312, e.g. corresponding to UDM 104, stores, in the subscription information of the additional roaming UE 2308, an indication saying that NWSliceQuotaReachedCheck should be performed before accepting the UE's registration request (and/or PDU session request for the PDU session case).

In 2321, e.g. on a regular basis (e.g., event based subscription/notification) or on an on-demand basis (e.g., via a request/response approach), the H-PLMN OAM 2304 provides the related (network slice) quota information and the information about the current usage of the H-PLMN network slice 2303 to the H-PLMN 5GC 2302, e.g. to a H-PLMN NWDAF (Network Data Analytics Function) 2328 of the H-PLMN 5GC 2302, e.g. corresponding to NWDAF 117 of figure 1. The H-PLMN OAM 2304 may for example provide this information to the H-PLMN NWDAF 2328 by means of an information element (IE) newly introduced for that purpose. Alternatively, the H-PLMN NWDAF may collect the information about the current usage of the H-PLMN network slice 2303 from the other H-PLMN 5GC network functions, e.g., AMF in H-PLMN or SMF in H-PLMN for the number of non-roaming UEs being registered in the network slice 2303 or for the number of PDU Sessions being established in the network slice 2303 similar to the procedure as depicted in Figure 12 and Figure 14 respectively.

As in the examples of figure 16 and 17, it is assumed that in 2322, the additional roaming UE 2308 sends a registration request with a Requested NSSAI specifying the H-PLMN network slice. The request is received by a V-PLMN AMF 2330 of the V-PLMN 2311.

In 2323, the V-PLMN AMF checks the subscription of the additional roaming UE 2308 by sending a Nudm_SDM_Get Request to the UDM 2329 to which the UDM 2329 responds with a Nudm_SDM_Get response which indicates that a network quota should be checked for the additional roaming UE 2308.

In 2324, based on the subscription information received from the UE 2329, the V-PLMN AMF 2330 determines that it should check whether the network slice quota has been reached.

In 2325, for checking whether the quota has been reached, the V-PLMN AMF 2330 sends an Nnwdaf_AnalyticsInfo request to the H-PLMN 2328 to which the H-PLMN 2328 responds with an Nnwdaf_AnalyticsInfo response.

In 2326, the V-PLMN AMF can react accordingly, e.g., by sending Rejected S-NSSAI with a cause value of "H-PLMN NW Slice Quota Reached".

In other words, the UDM 2329 in the H-PLMN 2312 provides an indication to the V-PLMN AMF 2330 that network slice quota reached checking shall be performed prior to accepting the additional UE's request. After that, the V-PLMN AMF 2330 checks whether the network slice quota has been reached by directly requesting corresponding information from the H-PLMN NWDAF 2328 or via other NFs (e.g. V-PLMN PCF, V-PLMN NWDAF, or H-PLMN PCF). The procedure for the V-PLMN AMF to check whether the quota has been reached via other NFs are the same as already described in Figure 18, Figure 19 and Figure 21.

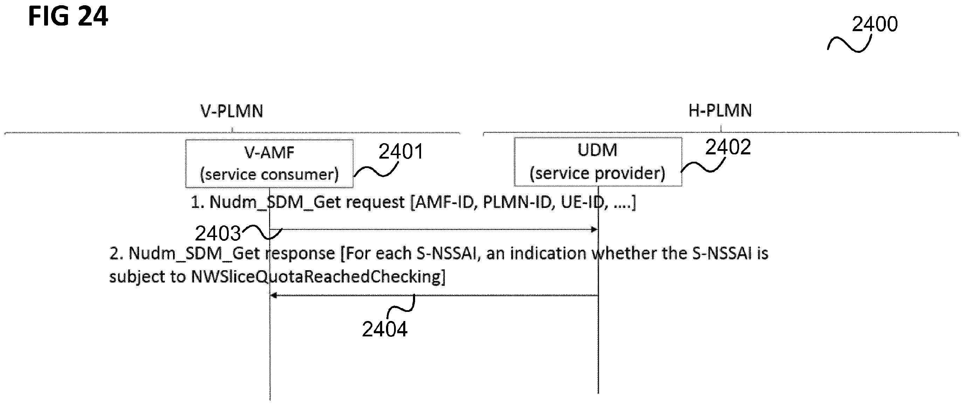

Figure 24 shows a flow diagram 2400 illustrating an example of UDM service enhancement to support an indication of network slice quota reached checking (i.e. an indication that a network slice quota should be checked).

A V-PLMN AMF 2401, e.g. corresponding to V-PLMN AMF 2330, and a UDM 2402, e.g. corresponding to UDM 2329, are involved in the flow.

In 2403, the V-PLMN AMF 2401 sends a Nudm_SDM_Get_request message to the UDM 2402 specifying a UE (e.g. additional roaming UE 2308).

In 2404 the UDM 2402 responds with a Nudm_SDM_Get response indicating, for one or more network slices, that a network slice quota should be checked for the UE when registering (or requesting a PDU session for the PUD session case) in the network slice.

Regarding the monitoring of the number of UEs and/or PDU Sessions in the roaming scenario, this may be performed similarly as in the non-roaming scenario described above.

Specifically, the V-PLMN AMF 1731, 2330 may provide corresponding information to the H-PLMN NWDAF 1728, 2328 similarly (i.e. according to the same process) as the AMF 1201 provides information to the NWDAF 1202 described with reference to figure 12.

It should be noted that that a network exposure function may be provided between the V-PLMN AMF 1731, 2330 and the H-PLMN NWDAF 1728, 2328 so that each PLMN (V-PLMN and H-PLMN) may control what information could be exposed to the other PLMN (this also applies to the procedures described in the following).

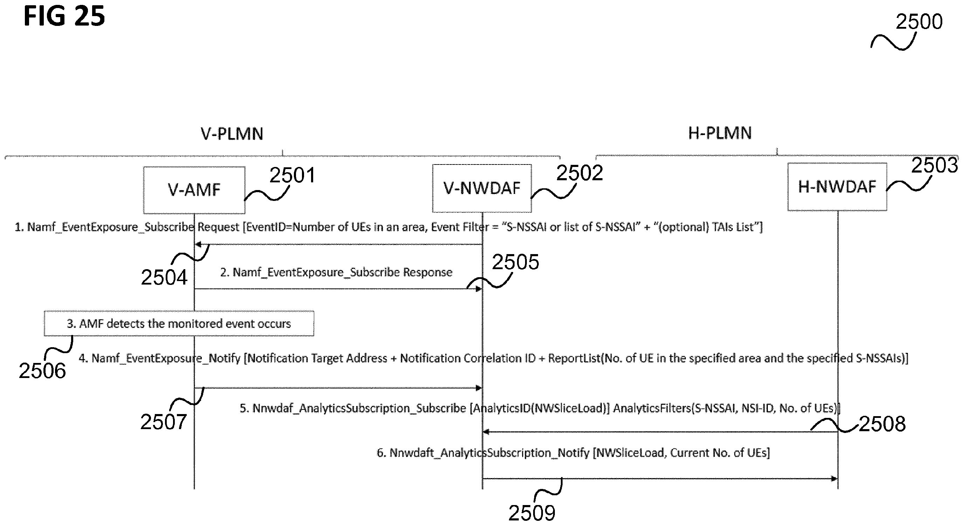

The V-PLMN AMF 1731, 2330 may also provide the information related to the number of UEs in the roaming scenario to the H-PLMN NWDAF 1728, 2328 via a V-NWDAF as illustrated in figure 25. Alternatively, the V-PLMN AMF 1731, 23300 may also provide the information related to the number of UEs in the roaming scenario to the H-PLMN NWDAF 1728, 2328 directly without a V-NWDAF being involved.

Figure 25 shows a flow diagram 2500 illustrating an example of an H-PLMN NWDAF collecting information from a V-PLMN AMF to know about the current number of registered UEs for a particular network slice(s) in a specified area.

The approach of figure 25 can be seen as a variant for the approach mentioned above which works analogously to figure 12.

A V-PLMN AMF 2501, e.g. corresponding to V-PLMN AMF 1731, 2330, a V-NWDAF 2502, e.g. of V-PLMN 1711, 2311, and a H-PLMN NWDAF 2503, e.g. corresponding to H-PLMN NWDAF 1728, 2328 are involved in the flow.

In 2504, the V-NWDAF 2502 sends a subscribe request to the V-PLMN AMF 2501 to be informed about the number of UEs registered in an area and, for each of one or more network slices, the number of UEs registered in the network slice. The V-NWDAF 2502 may specify the one or more network slices by an S-NSSAI or a list of S-NSSAIs. The request may further optionally include a list of tracking area identifiers (for specifying an area) or a list of registration areas or a list of geographical areas. If there are multiple V-PLMN AMFs serving the same network slice, the V-PLMN NWDAF may send multiple subscribe requests to these V-PLMN AMFs. In such a case, the V-PLMN NWDAF calculates the total number of UEs being registered in a particular network slice, e.g., by simply summation the number of UEs from all areas of the network slice.

In 2505, the V-PLMN AMF 2501 acknowledges the subscription (and may notify the V-NWDAF about a current number of UEs present in the area and the number of UEs registered for each of the one or more network slices).

In 2506, the V-PLMN AMF 2501 detects that the number of UE present in the area and/or registered in the one or more network slices has changed, for example, due to the successful registration of a UE in the network slice, and therefore, in 2507, informs the V-NWDAF 2502 about the changed number of UEs present in the area and the number of UEs registered for each of the one or more network slices.

In 2508, the H-PLMN NWDAF 2503 sends an Nnwdaf_AnalyticsSubscription_Subscribe message to the V-PLMN NWDAF 2202 to request being notified about the slice load (i.e. the number of registered UEs, e.g. of slice 1703, 2303). This may also happen before 2507, 2506, 2505 or 2504.

In 2509, the V-PLMN NWDAF 2502 notifies the H-PLMN NWDAF 2503 by means of an Nnwdaf_AnalyticsSubscription_Notify about the network slice load.

Regarding the collection of information to know about the current number of UEs for one or more particular network slices in the whole PLMN in the roaming case, the V-PLMN OAM 1716, 2316 may perform a method with the H-PLMN NWDAF 1728, 2328 as the OAM 1301 does with the NWDAF 1302 in the non-roaming case as described with reference to figure 13.

It should be noted that alternatively, the OAM 1704, 2304 in the H-PLMN may collect information about the number of UEs if such information is not available in the OAM in the H-PLMN. Otherwise, if the OAM 1704, 2304 in the H-PLMN is aware of the number of UEs which are roaming to V-PLMN 1711, 2311 and accessing a network slice 1715, 2315 then the H-PLMN NWDAF 1728, 2328 can get such information directly from the the OAM 1704, 2304 in HPLMN without collection of such information from OAM in VPLMN 1716, 2316 and without collection of such information from the 5G CN Network Functions in the V-PLMN.

Regarding the collection of information to know about the current number of PDU sessions for one or more particular network slices in the roaming case, the V-PLMN SMF may perform a method with the H-PLMN NWDAF 1728, 2328 as the SMF 1401 does with the NWDAF 1402 in the non-roaming case as described with reference to figure 14.

It should be noted that that a network exposure function may be provided between the V-PLMN SMF and the H-PLMN NWDAF 1728, 2328 so that each PLMN (V-PLMN and H-PLMN) may control what information could be exposed to the other PLMN (this also applies to the procedures described in the following).

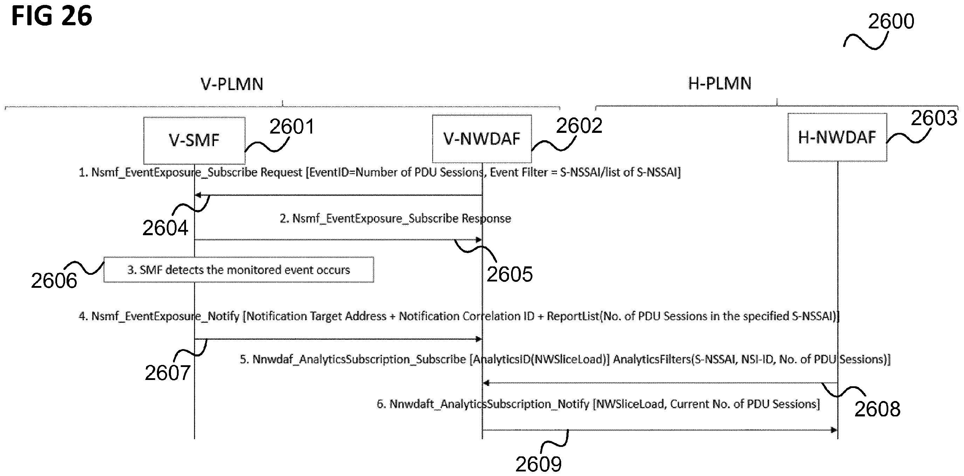

Figure 26 shows a flow diagram 2600 illustrating an example of an H-PLMN NWDAF collecting information from a V-PLMN SMF to know about the current number of PDU sessions for one or more particular network slices.

The approach of figure 26 can be seen as a variant for the approach mentioned above which works analogously to figure 14.

A V-SMF 2601, e.g. of V-PLMN 1711, 2311, a V-NWDAF 2602, e.g. of V-PLMN 1711, 2311, and a H-PLMN NWDAF 2603, e.g. corresponding to H-PLMN NWDAF 1728, 2328 are involved in the flow.

In 2604, the V-NWDAF 2602 sends a subscribe request to the V-SMF 2601 to be informed about the number of PDU sessions for each of one or more network slices. The V-NWDAF 2602 may specify the one or more network slices by an S-NSSAI or a list of S-NSSAIs. If there are multiple V-PLMN SMFs serving the same network slice, the V-PLMN NWDAF may send multiple subscribe requests to these V-PLMN SMFs. In such a case, the V-NWDAF calculates the total number of PDU Sessions being established in this network slice, e.g., by summation of the number of PDU Sessions from each V-SMF serving the same network slice.

In 2605, the V-SMF 2601 acknowledges the subscription (and may notify the V-NWDAF about a current number of PDU sessions for each of the one or more network slices).

In 2606, the V-SMF 2601 detects that the number of PDU sessions in the one or more network slices has changed, for example due to the successful PDU Sessions establishment for a UE in the network slice, and therefore, in 2607, informs the V-NWDAF 2602 about the changed number of PDU sessions for each of the one or more network slices.

In 2608, the H-PLMN NWDAF 2603 sends an Nnwdaf_AnalyticsSubscription_Subscribe message to the V-PLMN NWDAF 2202 to request being notified about the slice load (i.e. the PDU sessions, e.g. of slice 1703, 2303). This may also happen before 2607, 2606, 2605 or 2604.

In 2609, the V-PLMN NWDAF 2602 notifies the H-PLMN NWDAF 2603 by means of an Nnwdaf_AnalyticsSubscription_Notify about the network slice load.

Regarding the collection of information to know about the PDU sessions for one or more particular network slices in the whole PLMN in the roaming case, the V-PLMN OAM 1716, 2316 may perform a method with the H-PLMN NWDAF 1728, 2328 as the OAM 1501 does with the NWDAF 1502 in the non-roaming case as described with reference to figure 15.

It should be noted that alternatively, the OAM 1704, 2304 in the H-PLMN may collect information about the number of PDU sessions if such information is not available in the OAM in the H-PLMN. Otherwise, if the OAM 1704, 2304 in the H-PLMN is aware of the number of PDU sessions of UEs which are roaming to V-PLMN 1711, 2311 and accessing a network slice 1715, 2315 then the H-PLMN NWDAF 1728, 2328 can get such information directly from the the OAM 1704, 2304 in HPLMN without collection of such information from OAM in VPLMN 1716, 2316 and without collection of such information from the 5G CN Network Functions in the V-PLMN.

It should be noted that instead of having a local configuration or operator policy at the V-PLMN AMF 1731, 2330 to know whether it should be checked whether a network slice quota has been reached for a certain network slice (specified by an S-NSSAI) the OAM 1704, 2304 in the HPLMN may communicate with the OAM 1716, 2316 in the VPLMN which then further communicates such information to the V-PLMN AMF 1731, 2330 by the V-PLMN-OAM 1716, 2316.

Further, like for example in figures 25 and 26, instead of having the network functions in V-PLMN 1711, 2311 communicating with the H-PLMN NWDAF 1728, 2328, the V-PLMN AMF or the V-SMF may communicate with the V-NWDAF, which then further communicates with H-PLMN NWDAF to check whether the network slice quota has been reached.

To support the roaming case, an operator may want to differentiate the number of non-roaming UEs and the number of roaming UEs. Hence, it may be useful to specify the number of roaming UEs in a slice and/or the number of non-roaming UEs in the network slice type (NEST). For this, additional attributes to the Generic Network Slice Template (GST) may be provided as given in lines 3 and 4 of table 1 below (illustrating a GST for network slice, e.g. of network slice 1703, 2303).

**Table 1**

| Attribute | Description |
|---|---|
| Number of terminals | Maximum number of terminals that can use the network slice simultaneously |
| Number of non-roaming terminals | Maximum number of non-roaming terminals that can use the network slice simultaneously |
| Number of roaming terminals | Maximum number of roaming terminals that can use the network slice simultaneously |
| Number of connections | Maximum number of concurrent sessions supported by the network slice |
| Number of non-roaming connections | Maximum number of concurrent non-roaming sessions supported by the network slice |
| Number of roaming connections | Maximum number of concurrent roaming sessions supported by the network slice |

It should be noted that depending on the scenario, the specification of the number of roaming terminals may be sufficient. For the PDU session case, a similar concept may be applied for the number of connections (i.e. sessions) for non-roaming and for roaming (see additional attributes of lines 6 and 7 of table 1).

Furthermore, a network slice (of a NEST) may have multiple network slice instances. In the following, approaches for handling aspects of having multiple network slice instances for a NEST a provided.

Based on an operator's operational or deployment needs, a Network Slice instance can be associated with one or more S-NSSAIs, and an S-NSSAI can be associated with one or more Network Slice instances. Multiple Network Slice instances associated with the same S-NSSAI may be deployed in the same or in different Tracking Areas.

A NEST (Network Slice Type) is applied to a Network Slice even when supported by multiple Network Slice instances That means, for example, if a "maximum number of terminals" is specified for a network slice to support in NEST, and there are multiple network slice instances that are associated with this network slice (S-NSSAI), then the total number of terminals supported by all network slice instances of this network slice shall not be more than the maximum number of terminals specified in NEST. It should be noted that a NEST is a GST filled with values.

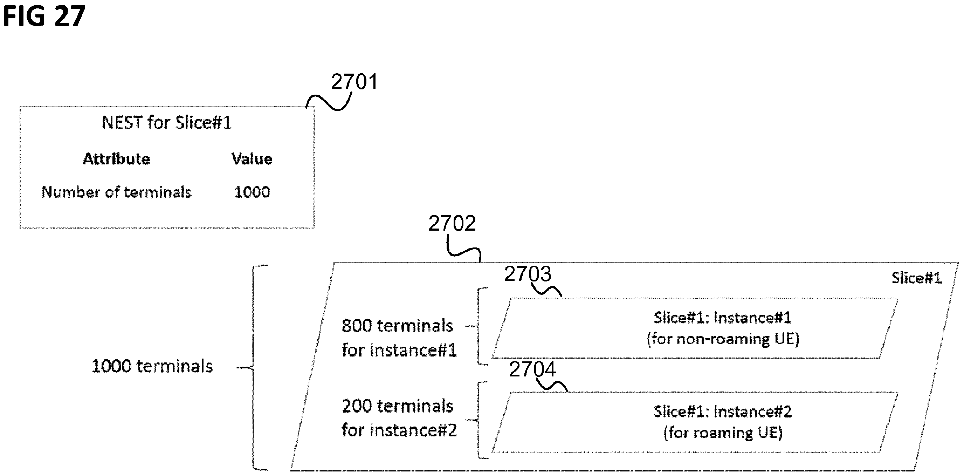

Figure 27 illustrates a NEST 2701 for a network slice 2702 having a first network slice instance 2703 and a second network slice instance 2704.

The NEST 2701 specifies that 1000 terminals is the maximum number of terminals allowed to be registered in the network slice 2702. This maximum number may for example be distributed over the two network slice instances 2703, 2704 such that, for example, the maximum number of UEs for the first network slice instance 2703 (which is for example provided for serving non-roaming UEs) is 800 and the maximum number of UEs for the second network slice instance 2704 (which is for example provided for serving roaming UEs) is 200. Similarly to table 1, the GST may be enhanced to support multiple network slice instances in a network slice and to specify which network slice instance would support how many UEs or how many PDU Sessions/connections.

For this, additional attributes to the Generic Network Slice Template (GST) may be provided as given in lines 2, 4 and 5 and 7 and 8 of table 2 below (illustrating a GST for network slice, e.g. of network slice 1703, 2303).

**Table 2**

| Attribute | Description |
|---|---|
| Number of network slice instances | Number of network slice instances for this GST |
| Number of terminals | Maximum number of terminals that can use the network slice simultaneously |
| Number of terminals - instance#1 | Maximum number of terminals that can use network slice instance#1 simultaneously |
| Number of terminals - instance#2 | Maximum number of terminals that can use network slice instance#2 simultaneously |
| Number of connections | Maximum number of concurrent sessions supported by the network slice |
| Number of connections - instance#1 | Maximum number of concurrent sessions supported by the network slice instance#1 |
| Number of connections - instance#2 | Maximum number of concurrent sessions supported by the network slice instance#2 |

Procedures similarly to figures 6 to 10 may be applied for the case of multiple network slice instances of a network slice. For this, the corresponding messages may, when specifying an S-NSSAI in addition specify one or more NSI-IDs.

According to various embodiments, instead of having two PLMNs as in the roaming case above (V-PLMN and H-PLMN) information about network slice quota being reached and network slice quota monitoring is applied to the case of a PLMN integrated NPN, where SMF and/or UPF may be managed by the NPN, but AMF and RAN are provided by PLMN. In such a case, an NWDAF or an NF which is aware of a network slice quota may need to monitor the number of PDU Sessions established in NPN.

In the following, approaches for handling such as scenario including a Non-Public Network (NPN) are described including the interaction between NWDAF, OAM and/or other network functions in the PLMN.

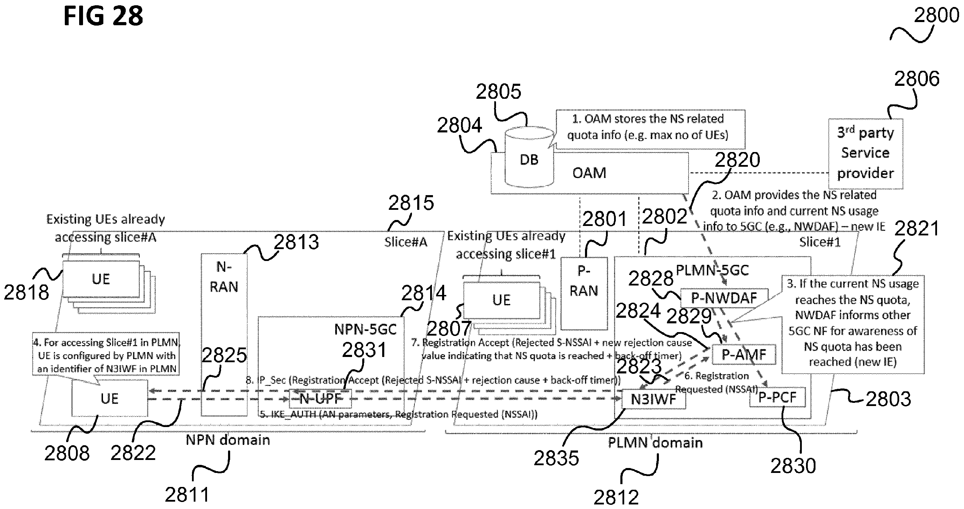

Figure 28 shows a radio communication system 2800 having network slice quota related to the maximum number of UEs allowed to be registered in a network slice in a standalone NPN (SNPN) scenario.

In an SNPN scenario an NPN has the RAN and the 5GC NFs owned and managed by the NPN itself.

The radio communication system comprises an NPN 2811 and a PLMN 2812. Similarly to the radio communication system 200 of figure 2, the PLMN 2812 comprises a PLMN RAN 2801, e.g. corresponding to RAN 103, a PLMN 5G core network (5GC) 2802, e.g. corresponding to 5GC 118 which includes a PLMN (core) network slice 2803, e.g. corresponding to one of the network slices 106, 107 and an PLMN OAM 2804, e.g. corresponding to OAM 116. It should be noted that there may also be a plurality of PLMN RANs 2801 providing radio access to the network slice 2803.

The PLMN OAM 2804 has a PLMN database 2805 (e.g. a storage or memory) which stores one or more quota for the PLMN network slice 2803, i.e. the maximum number of UEs supported by (or allowed for) the network slice by the PLMN network slice 2803.

Optionally, the quota may be based on a request by a 3^{rd} party service provider 2806 which requests the operator of the PLMN 2812 to limit a number of UEs for the PLMN network slice 2803.

It is assumed that a plurality of non-roaming UEs 2807 are already accessing the PLMN network slice 2803 (i.e. are registered with the PLMN network slice 2803).

The NPN 2811 comprises a NPN RAN 2813 and a NPN 5G core network (5GC) 2814, e.g. corresponding to 5GC 118 which includes a NPN (core) network slice 2815. It should be noted that there may also be a plurality of NPN RANs 2813 providing radio access to the NPN network slice 2815.

It is assumed that a plurality of NPN UEs 2818 is accessing the NPN network slice 2815 (i.e. are registered with the NPN network slice 2815).

The NPN 2811 provides the NPN UEs 2818 with access to the PLMN network slice 2803 via the NPN network slice 2815.

In 2820, e.g. on a regular basis (e.g., event based subscription/notification) or on an on-demand basis (e.g., via a request/response approach), the PLMN OAM 2804 provides the related (network slice) quota information and the information about the current number of UEs registered in the PLMN network slice 2803 to the PLMN 5GC 2802, e.g. to a PLMN NWDAF (Network Data Analytics Function) 2828 of the H-PLMN 5GC 2802, e.g. corresponding to NWDAF 117 of figure 1. The PLMN OAM 2804 may for example provide this information to the PLMN NWDAF 2828 by means of an information element (IE) newly introduced for that purpose.

In 2821, if the current number of UEs registered in the PLMN network slice 2803 reaches the network slice quota, the PLMN NWDAF 2828 informs other H-PLMN 5GC network functions such that they are aware that the network slice quota has been reached. This may be performed by an information element (IE) newly introduced for that purpose. For example, the PLMN NWDAF 2828 may inform an PLMN AMF 2829 in this manner and/or may inform a PLMN PCF 2830.

It is assumed that in 2822, an additional NPN UE 2808 sends a registration request with a Requested NSSAI specifying the PLMN network slice 2803.

It is assumed that NPN UE 2808 is already registered at the NPN domain before it registers with the PLMN 2812.

For accessing the core network slice 2803 in the PLMN, the additional UE 2808 may be configured by the PLMN with an identifier of an Non-3GPP interworking function (N3IWF) 2835. The request from the UE is received by an NPN UPF 2831 of the NPN 2811 which forwards it to the N3IWF 2835.

In 2823, according to the registration request from the UE 2808, the N3IWF 2835 sends a registration request (specifying the core network slice 2803) to the PLMN AMF 2829.

In case the quota has been reached, the PLMN AMF 2829, in 2824, responds to the request of 2823 by means of a rejection of registration to the network slice 2803. For example, it may send a registration accept (indicating one or more allowed network slices other than the network slice 2803). The registration accept message includes an indication of the rejected S-NSSAI of the network slice 2803 and may further include a rejection cause value which indicates that the network slice quota is reached and may include an indication of back-off time. In case there is no allowed network slice, the PLMN AMF may provide an empty Allowed NSSAI in the Registration Accept being sent to the UE, so that the UE is registered in the PLMN but shall wait for the completion of the checking of whether the quota has been reached. In this case, the UE will not attempt to use any service provided by the PLMN except emergency services depending on the operator policy.

The N3IWF 2835 forwards the PLMN AMF's response to the UE 2808 in 2825.

In summary, in order to be able to access the network slice 2803 in the PLMN 2812, the NPN UE 2808 needs to register to the PLMN 2812 the network slice 2803. Registration is done via the N3IWF 2835. The N3IWF 2835 discovers the appropriate AMF 2829 in the PLMN 2812 (e.g. based on the AN parameter sent by the UE). Assuming that PLMN AMF 2829 is aware that the network slice quota is reached, it may accept the registration request but reject the registration for the network slice 2803 with a rejection cause indicating of "NW Slice Quota Reached" or alternatively, it may accept the registration request but provided an empty Allowed NSSAI as mentioned above. This registration accept message is then transferred to the NPN UE 2808 via the N3IWF 2835, e.g. with an IP_Sec message.

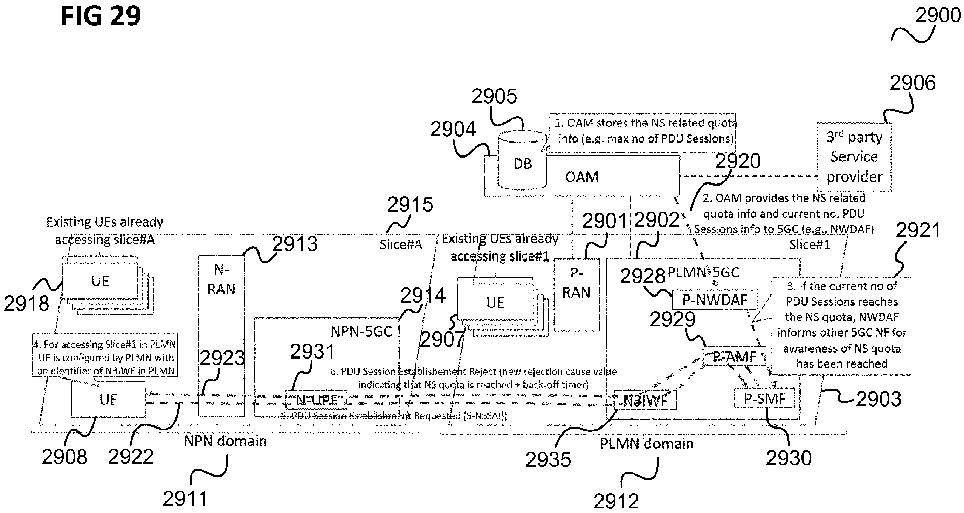

Figure 29 shows a radio communication system 2900 having network slice quota related to the maximum number of PDU sessions in a network slice in a standalone NPN (SNPN) scenario.

The radio communication system comprises an NPN 2911 and a PLMN 2912. Similarly to the radio communication system 200 of figure 2, the PLMN 2912 comprises a PLMN RAN 2901, e.g. corresponding to RAN 103, a PLMN 5G core network (5GC) 2902, e.g. corresponding to 5GC 118 which includes a PLMN (core) network slice 2903, e.g. corresponding to one of the network slices 106, 107 and an PLMN OAM 2904, e.g. corresponding to OAM 116. It should be noted that there may also be a plurality of PLMN RANs 2901 providing radio access to the network slice 2903.

The PLMN OAM 2904 has a PLMN database 2905 (e.g. a storage or memory) which stores one or more quota for the PLMN network slice 2903, i.e. the maximum number of PDU Session supported by (or allowed for) the network slice by the PLMN network slice 2903.

Optionally, the quota may be based on a request by a 3^{rd} party service provider 2906 which requests the operator of the PLMN 2912 to limit a number of PDU Sessions for the PLMN network slice 2903.

It is assumed that a plurality of non-roaming UEs 2907 already have PDU sessions by means of the PLMN network slice 2903.

The NPN 2911 comprises a NPN RAN 2913 and a NPN 5G core network (5GC) 2914, e.g. corresponding to 5GC 118 which includes a NPN (core) network slice 2915. It should be noted that there may also be a plurality of NPN RANs 2913 providing radio access to the NPN network slice 2915.

It is assumed that a plurality of NPN UEs 2918 is accessing the NPN network slice 2915 (i.e. have PDU sessions by means of the NPN network slice 2915).

The NPN 2911 provides the NPN UEs 2918 with access to the PLMN network slice 203 via the NPN network slice 2915.

In 2920, e.g. on a regular basis (e.g., event based subscription/notification) or on an on-demand basis (e.g., via a request/response approach), the PLMN OAM 2904 provides the related (network slice) quota information and the information about the current number of PDU sessions of the PLMN network slice 2903 to the PLMN 5GC 2902, e.g. to a PLMN NWDAF (Network Data Analytics Function) 2928 of the H-PLMN 5GC 2902, e.g. corresponding to NWDAF 117 of figure 1. The PLMN OAM 2904 may for example provide this information to the PLMN NWDAF 2928 by means of an information element (IE) newly introduced for that purpose.

In 2921, if the current number of PDU sessions of the PLMN network slice 2903 reaches the network slice quota, the PLMN NWDAF 2928 informs other H-PLMN 5GC network functions such that they are aware that the network slice quota has been reached. This may be performed by an information element (IE) newly introduced for that purpose. For example, the PLMN NWDAF 2928 may inform an PLMN SMF 2930 in this manner.

It is assumed that in 2922, an additional NPN UE 2908 sends a PDU session request with a Requested NSSAI specifying the PLMN network slice 2903.

It is assumed that before the NPN UE 2908 establishes a PDU Session for the PLMN network slice 2903 the NPN UE 2908 is already registered at NPN domain and at PLMN domain.

The request from the UE is received by a an NPN UPF 2931 of the NPN 2911 which forwards it via an N3IWF 2935 and the PLMN AMF 2929 to the PLMN SMF 2930.

In case the quota has been reached, the PLMN SMF 2930, in 2923, responds to the request of 2922 by means of a rejection of PDU session to the network slice 2903. For example, it may send a PDU session reject including a rejection cause value which indicates that the network slice quota is reached and may include an indication of back-off time.

In summary, PDU Session establishment is done via a N3IWF in PLMN 2912 via a N-UPF in NPN domain. The N3IWF 2935 forwards the PDU Session establishment request to the SMF 2930 via the AMF 2929 in PLMN 2912. Assuming that the SMF 2930 is aware that NW Slice quota is reached either from the OAM 2905 or from the NWDAF 2928 the SMF 2930 rejects the UE's request with a rejection cause indicating of "NW Slice Quota Reached". This PDU Session Establishment reject message is then transferred to the UE 2908 via the AMF 2029 and N3IWF 2935 in PLMN and then via N-UPF 2931 in NPN domain.

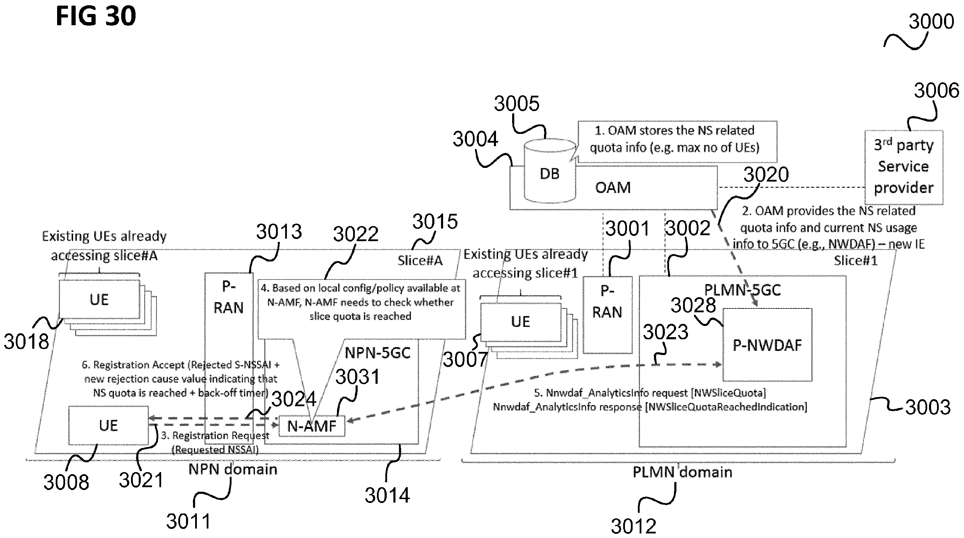

Figure 30 shows a radio communication system 3000 having network slice quota related to the maximum number of UEs allowed to be registered in a network slice in a Public Network Integrated NPN (PNI-NPN) scenario.

In the PNI-NPN scenario there are some network entities (RAN or some 5GC NF) which are owned by a PLMN and provided and managed by the PLMN.

The radio communication system comprises an NPN 3011 and a PLMN 3012. Similarly to the radio communication system 200 of figure 2, the PLMN 3012 comprises a PLMN RAN 3001, e.g. corresponding to RAN 103, a PLMN 5G core network (5GC) 3002, e.g. corresponding to 5GC 118 which includes a PLMN (core) network slice 3003, e.g. corresponding to one of the network slices 106, 107 and an PLMN OAM 3004, e.g. corresponding to OAM 116. It should be noted that there may also be a plurality of PLMN RANs 3001 providing radio access to the network slice 3003.

The PLMN OAM 3004 has a PLMN database 3005 (e.g. a storage or memory) which stores one or more quota for the PLMN network slice 3003, i.e. the maximum number of UEs supported by (or allowed for) the network slice by the PLMN network slice 3003.

Optionally, the quota may be based on a request by a 3^{rd} party service provider 3006 which requests the operator of the PLMN 3012 to limit a number of UEs for the PLMN network slice 3003.

It is assumed that a plurality of PLMN UEs 3007 are already accessing the PLMN network slice 3003 (i.e. are registered with the PLMN network slice 3003).

The NPN 3011 comprises a NPN RAN 3013 and a NPN 5G core network (5GC) 3014, e.g. corresponding to 5GC 118 which includes a NPN (core) network slice 3015. It should be noted that there may also be a plurality of NPN RANs 3013 providing radio access to the NPN network slice 3015.

It is assumed that a plurality of NPN UEs 3018 is accessing the NPN network slice 3015 (i.e. are registered with the NPN network slice 3015).

The NPN 3011 provides the NPN UEs 3018 with access to the PLMN network slice 203 via the NPN network slice 3015.

In 3020, e.g. on a regular basis (e.g., event based subscription/notification) or on an on-demand basis (e.g., via a request/response approach), the PLMN OAM 3004 provides the related (network slice) quota information and the information about the current number of UEs registered in the PLMN network slice 3003 to the PLMN 5GC 3002, e.g. to a PLMN NWDAF (Network Data Analytics Function) 3028 of the H-PLMN 5GC 3002, e.g. corresponding to NWDAF 117 of figure 1. The PLMN OAM 3004 may for example provide this information to the PLMN NWDAF 3028 by means of an information element (IE) newly introduced for that purpose.

It is assumed that in 3021, an additional NPN UE 3008 sends a registration request with a Requested NSSAI specifying the PLMN network slice 3003.

The request from the UE is received by a an NPN AMF 3031 of the NPN 3011.

In 3022, based on a local configuration and/or a policy available at the N-AMF 3031, the N-AMF 3031 determines that it needs to check whether the slice quota has been reached before registering the NPN UE 3008. Alternatively, a similar approach as decribed in Figure 23 may be used, where the N-AMF 3030 may get the information from the UDM in order to know whether the checking whether the slice quota has been reached should be done prior to accepting the UE to be registered for the network slice.

In 3023, for checking whether the quota has been reached, the N-AMF 2330 sends an Nnwdaf_AnalyticsInfo request to the PLMN NWDAF 2328 to which the PLMN NWDAF 2328 responds with an Nnwdaf_AnalyticsInfo response.

In case this response indicates that the quota has been reached, the NPN AMF 3031, in 3024, responds to the request of 3021 by means of a rejection of registration to the network slice 3003. For example, it may send a registration accept (indicating one or more allowed network slices other than the network slice 3003). The registration accept message includes an indication of the rejected S-NSSAI of the network slice 3003 and may further include a rejection cause value which indicates that the network slice quota is reached and may include an indication of back-off time. In case there is no allowed network slice, the PLMN AMF may provide an empty Allowed NSSAI in the Registration Accept being sent to the UE, so that the UE is registered in the PLMN but shall wait for the completion of the checking of whether the quota has been reached. In this case, the UE will not attempt to use any service provided by the PLMN except emergency services depending on the operator policy.

Although figure 30 shows that the N-AMF 3031 can directly communicate with the PLMN NWDAF 3028 other alternatives are also possible. For example, the N-AMF 3031 may first talk to an NPN NWDAF in the NPN 5GC 3014 which then further communicates with the PLMN NWDAF 3028 to get the information whether the network slice quota reached as requested by the UE has been reached.

Further, instead of asking for information from the PLMN NWDAF 3028 for every UE registration request, the NPN AMF 3031 may subscribe to an "NW Slice Quota Reached Info" event at the PLMN NWDAF 3028 (possibly via an NPN NWDAF). Alternatively, such network slice quota reached information may stem from OAM 3004 in PLMN 3012 which can either send the information to the NPN AMF 3031 directly or else, if the NPN domain also has its own OAM domain, the OAM 3004 in PLMN 3012 may convey such network slice quota reached information to the OAM in the NPN domain.

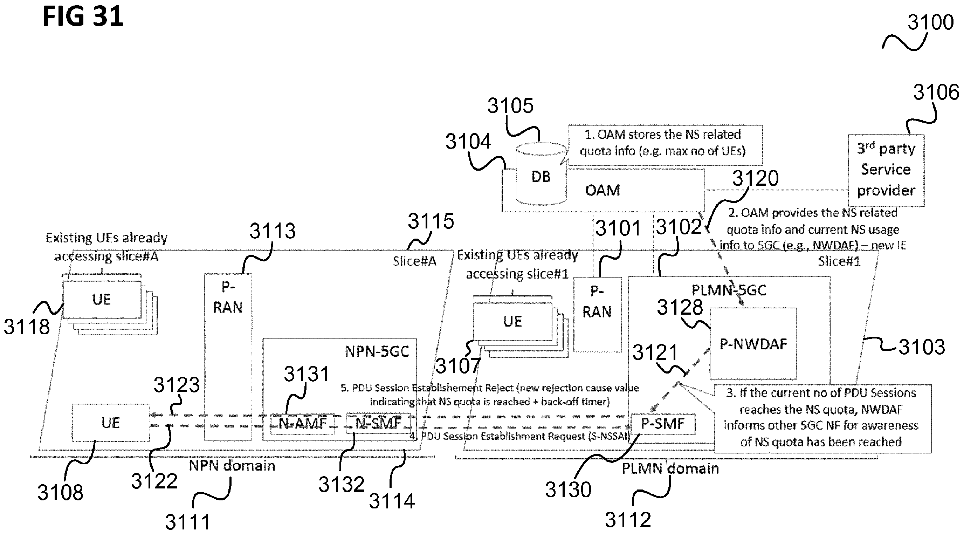

Figure 31 shows a radio communication system 3100 having network slice quota related to the maximum number of PDU sessions in a network slice in a Public Network Integrated NPN (PNI-NPN) scenario.

The radio communication system comprises an NPN 3111 and a PLMN 3112. Similarly to the radio communication system 200 of figure 2, the PLMN 3112 comprises a PLMN RAN 3101, e.g. corresponding to RAN 103, a PLMN 5G core network (5GC) 3102, e.g. corresponding to 5GC 118 which includes a PLMN (core) network slice 3103, e.g. corresponding to one of the network slices 106, 107 and an PLMN OAM 3104, e.g. corresponding to OAM 116. It should be noted that there may also be a plurality of PLMN RANs 3101 providing radio access to the network slice 3103.

The PLMN OAM 3104 has a PLMN database 3105 (e.g. a storage or memory) which stores one or more quota for the PLMN network slice 3103, i.e. the maximum number of PDU Session supported by (or allowed for) the network slice by the PLMN network slice 3103.

Optionally, the quota may be based on a request by a 3^{rd} party service provider 3106 which requests the operator of the PLMN 3112 to limit a number of PDU Sessions for the PLMN network slice 3103.

It is assumed that a plurality of PLMN UEs 3107 already have PDU sessions by means of the PLMN network slice 3103.

The NPN 3111 comprises a NPN RAN 3113 and a NPN 5G core network (5GC) 3114, e.g. corresponding to 5GC 118 which includes a NPN (core) network slice 3115. It should be noted that there may also be a plurality of NPN RANs 3113 providing radio access to the NPN network slice 3115.

It is assumed that a plurality of NPN UEs 3118 is accessing the NPN network slice 3115 (i.e. have PDU sessions by means of the NPN network slice 3115).

The NPN 3111 provides the NPN UEs 3118 with access to the PLMN network slice 203 via the NPN network slice 3115.

In 3120, e.g. on a regular basis (e.g., event based subscription/notification) or on an on-demand basis (e.g., via a request/response approach), the PLMN OAM 3104 provides the related (network slice) quota information and the information about the current number of PDU sessions of the PLMN network slice 3103 to the PLMN 5GC 3102, e.g. to a PLMN NWDAF (Network Data Analytics Function) 3128 of the H-PLMN 5GC 3102, e.g. corresponding to NWDAF 117 of figure 1. The PLMN OAM 3104 may for example provide this information to the PLMN NWDAF 3128 by means of an information element (IE) newly introduced for that purpose.

In 3121, if the current number of PDU sessions of the PLMN network slice 3103 reaches the network slice quota, the PLMN NWDAF 3128 informs other H-PLMN 5GC network functions such that they are aware that the network slice quota has been reached. This may be performed by an information element (IE) newly introduced for that purpose. For example, the PLMN NWDAF 3128 may inform an PLMN SMF 3130 in this manner.

It is assumed that in 3122, an additional NPN UE 3108 sends a PDU session request with a Requested NSSAI specifying the PLMN network slice 3103.

The request from the UE is received by an NPN AMF 3131 of the NPN 3111 which forwards it via an N-SMF 3132 to the PLMN SMF 3130.

In case the quota has been reached, the PLMN SMF 3130, in 3123, responds to the request of 3122 by means of a rejection of PDU session to the network slice 3103. For example, it may send a PDU session reject including a rejection cause value which indicates that the network slice quota is reached and may include an indication of back-off time.

Although figure 31 shows that the PLMN SMF 3130 is informed by the PLMN NWDAF 3128 of "NW Slice Quota Reached" it is also possible that the NPN AMF 3131 or the NPN SMF 3132 may be informed of such "NW Slice Quota Reached" information by the P-NWDAF 3128 if it subscribes for such information. In that case, there may be an NWDAF in NPN domain (NPN NWDAF) which may may forward such information to the NPN AMF 3131 or the NPN SMF 3132.

Alternatively to getting informed by the P-NWDAF 3128, if the PLMN SMF 3130 has not received such indication of "NW Slice Quota Reached" information from the P-NWDAF 3128, the PLMN SMF 3130 may also send a request to the PLMN NWDAF 3128 for checking whether quota has been reached. Another option would be that the PLMN SMF 3130 anyway communicates with a PCF in the PLMN 3112 which may decide whether this PDU Session establishment request should be accepted. This may also help in case of a racing condition, when multiple PDU Session Establishment requests are sent simultaneously by multiple UEs for the same network slice.

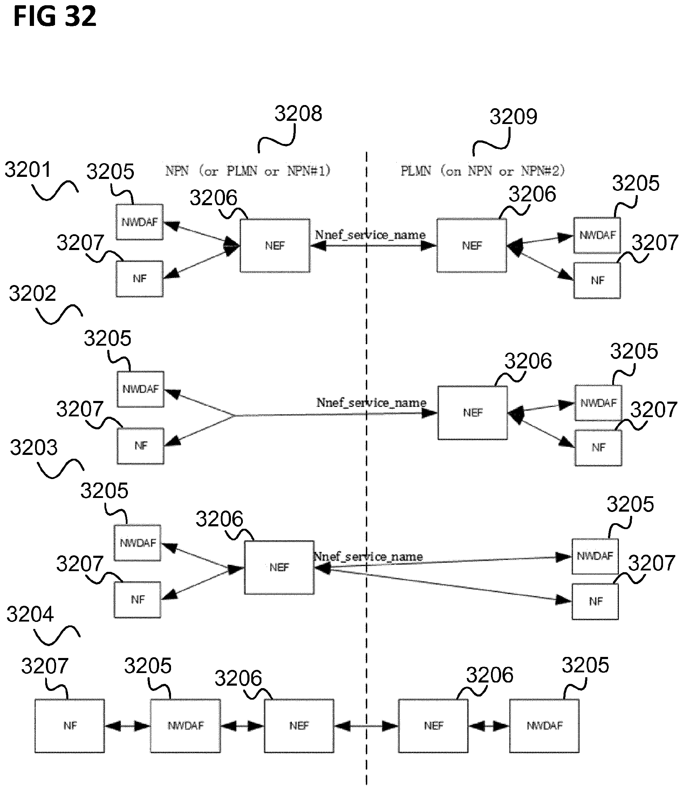

It should be noted that the racing issue may be addressed in the roaming case and the NPN case analogously as in the non-roaming case as described with reference to figure 11. Figure 32 illustrates possible setups 3201, 3202, 3203, 3204 of a 5GS with NWDAFs 3205, NEFs 3206 (Network Exposure Functions) and other network functions 3207 across PLMNs/NPN domains 3208, 3209.

This gives rise to the possibilities of getting "NW Slice Quota Reached Info" when the network architecture with NWDAF is set up differently across PLMNs or across NPNs domains.

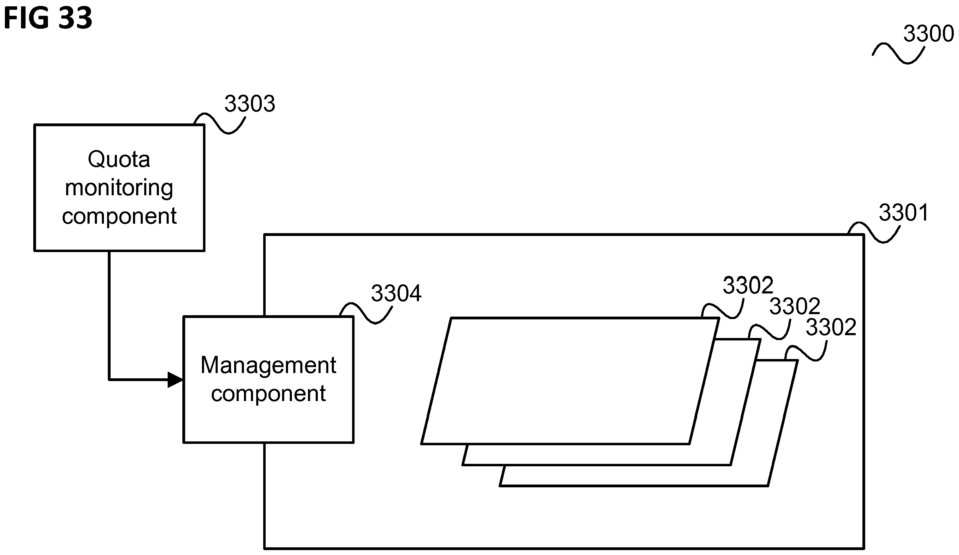

In summary, according to various embodiments, a communication network is provided as illustrated in figure 33.

Figure 33 shows a communication network arrangement 3300 according to an embodiment.

The communication network arrangement 3300 comprises one or more network slices 3302 of a communication network 3301.

The communication network arrangement 3300 further comprises a quota monitoring component 3303 and a management component 3304.

The quota monitoring component 3303 is configured to detect whether a quota which limits the maximum number of mobile terminals registered in a network slice and/or the maximum number of sessions provided in (or by) the network slice has been reached and is configured to notify the management component if the quota has been reached.

The management component 3304 is configured to reject a request of a mobile terminal for registration to the network slice or establishment of a session in (by) the network slice if the quota has been reached.

According to various embodiments, in other words, a communication network comprises a control arrangement comprising a quota monitoring component and a management component. The quota monitoring component, which may also be seen as detection component, checks whether a quota (regarding a number of registered terminals and/or a number of established sessions) of a network slice has reached its limit. If this is the case, it notifies a management component, which is e.g. the component responsible for handling the respective type of requests for the network slice. This notification may be direct but may also be performed via other components. For example, an OAM may inform an AMF via an NWDAF and/or a PCF or an NWDAF may inform an AMF via a PCF. In response to the notification (which may also be an instruction by the quota monitoring component) the management component rejects the request.

In other words, the control arrangement is configured to enforce the quota. It may thus also be seen as a quota enforcing arrangement.

It should be noted that a network slice may cover the CN part, the RAN part or both the CN part and the RAN part of a mobile radio communication network. In particular this means that the network slice may be a core network slice or may be a RAN network slice or may be a network slice comprising both core network components and RAN network components.

According to various embodiments, mechanisms are introduced to notify and/or update the network slice related quota information, e.g. to a communication network function, e.g. in 5GC/RAN. This may also be performed across PLMNs (e.g. between a H-PLMN and a V-PLMN) and between a PLMN and an NPN. A request of a mobile terminal, e.g. a UE, for registration or session establishment may then be rejected based on the network slice quota. This may for example be a UE which is roaming, i.e. requesting registration or a PDU session in a V-PLMN. This allows an operator to enforce network slice related quota, which may for example be based on a service level agreement, even across PLMNs. In the roaming case, a network slice quota may be specified by the H-PLMN (e.g. the H-PLMN operator) or may be agreed upon by the H-PLMN and the V-PLMN (e.g. by the H-PLMN operator and the V-PLMN operator). For example, a 3^{rd} party may be allowed to request the definition or update of network slice related quota, e.g. from an OAM of the operator of the communication network.

In other words, the approach of figure 33 provides a mechanism for 5GS to enforce network slice related quota handling, e.g., to ensure that the maximum number of UEs and/or the maximum number of (e.g. PDU) sessions in a network slice is kept within a network slice quota.

It should be noted that the communication network arrangement 3300 of figure 33 may refer at least to parts of a whole radio communication network, e.g. a 5G radio communication network. For example, it may only refer to the parts involved in the quota enforcement, i.e. the control arrangement including the quota monitoring component and the management component and including at least one network slice. This means that the communication network arrangement 3300 may to a part of the components (in particular to one or more core network components) of a radio communication network and does not necessarily include a complete radio communication network like radio access network etc.

The quota monitoring component may be coupled to or may comprise a data acquisition component, i.e. a network component that is configured to collect the information of current status of network slice in terms of number of UEs and/or number of PDU Sessions.

The quota monitoring component may be configured to notify the management component in response to a request sent by the management component. The quota monitoring component may send this response if the quota has been reached.

The communication network arrangement may comprise a user subscription component configured to specify which network slice is subject to the checking of quota reached prior to the accepting of the mobile terminal request. The user subscription component may store, for each of a plurality of network slices, whether a respective quota (i.e. a quota defined for the network slice) should be checked in case of a request by the mobile terminal for registration in the network slice (in case of a quota regarding maximum number of registered mobile terminals) or for session establishment (in case of a quota regarding maximum number of sessions).

A 5G core network NF (network function) may be informed by means of an S-NSSAI which network slice is subject to a check whether a network slice quota has been reached.

For the roaming case, the communication network arrangement may comprise multiple communication networks belonging to multiple network providers or operators, for example a first provider and a second provider. The quota monitoring component may be located in a first communication network of the first network provider. The management component may be located in the first communication network or a second communication network of the second network provider.

The management component may be configured to reject a request of mobile terminal for registration to the network while indicating that the network slice quota checking is pending.

The network slice may be configured to have multiple instances and the network slice quota may be limited for each network slice instance (e.g., one instance with maximum number of non-roaming UE and the other instance with maximum number of roaming UEs).

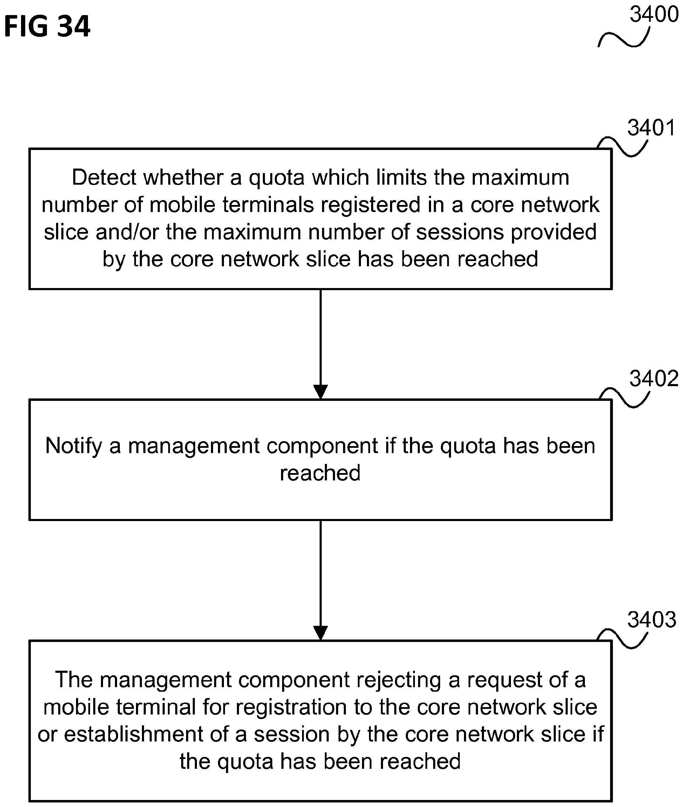

The communication network for example carries out a method as illustrated in figure 34.

Figure 34 shows a flow diagram 3400 illustrating a method for handling registration and/or session requests.

In 3401, it is detected whether a quota which limits the maximum number of mobile terminals registered in a network slice and/or the maximum number of sessions provided in the network slice has been reached.

In 3402, if the quota has been reached, a management component is notified.

In 3403, the management component rejects a request of a mobile terminal for registration to the network slice or establishment of a session in the network slice if the quota has been reached.

The components of the communication network arrangement (e.g. the quota monitoring component and the management component) and further components of the communication network may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

According to a further embodiment, a method and an arrangement for a communication network to perform network slice related quota management are provided. According to one embodiment, a network slice consists of a radio access network (RAN) part and a core network part of a core network (CN), which comprises one or more network entities. An operational and administrating management (OAM) component is provided for the network slice. In the method and arrangement, a UE requests for an access to the network slice or to set up a PDU Session to the network slice. The OAM component or the core network performs quota management related to the network slice which includes configuring the network slice with network slice quota including, e.g., a maximum number of UEs, a maximum number of PDU sessions, etc., subscribing the event when the network slice quota has been reached (e.g. by one or more network entities in the core CN or the RAN), notifying the event when the network slice quota has been reached to the network entities subscribing for the event and rejecting the UE request for access to a network slice or for establishing a PDU Session in the network slice, respectively, with an indication that a network slice quota has been reached and with a back-off timer to bar the UE from sending the request again while the back-off timer is running.

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

## Claims

1. A communication network arrangement comprising one or more network slices of a communication network;
a quota monitoring component; and
a management component, wherein
the quota monitoring component is configured to detect whether a quota which limits the maximum number of mobile terminals registered in a network slice and/or the maximum number of sessions provided in the network slice has been reached,
the quota monitoring component is configured to notify the management component if the quota has been reached and
the management component is configured to reject a request of a mobile terminal for registration to the network slice or establishment of a session in the network slice if the quota has been reached.

2. Communication network arrangement of claim 1, wherein the communication network is a 5G mobile communication network.

3. Communication network arrangement of any one of claims 1 or 2, further comprising a data acquisition component configured to acquire information about a current number of mobile terminals registered in the network slice and/or a current number of sessions provided in the network slice.

4. Communication network arrangement of any one of claims 1 to 3, wherein the quota limits the maximum number of mobile terminals registered in the network slice and the management component comprises an Access and Mobility Management Function.

5. Communication network arrangement of any one of claims 1 to 4, wherein the quota limits the maximum number of sessions provided in the network slice and the management component comprises a Session Management Function.

6. Communication network arrangement of any one of claims 1 to 5, comprising a storage component configured to store a specification of the quota.

7. Communication network arrangement of any one of claims 1 to 6, wherein the communication network arrangement comprises a first communication network and a second communication network of different providers and the management component is part of the first communication network and the quota monitoring component is part of the first communication network and/or the second communication network.

8. Communication network arrangement of any one of claims 1 to 6, wherein the communication network arrangement comprises a first communication network which is a visited communication network for the mobile terminal and a second communication network which is a home communication network for the mobile terminal, wherein the management component is part of the visited communication network and wherein the quota monitoring component is part of the home communication network.

9. Communication network arrangement of any one of claims 1 to 6, wherein the communication network arrangement comprises a first communication network which is non-public network and a second communication network which is a public network, wherein the management component is part of the first communication network and wherein the quota monitoring component is part of the second communication network.

10. Communication network arrangement of any one of claims 7 to 9, wherein the request is a request of the mobile terminal for a registration of a core network slice of the first communication network which maps to a network slice of the first communication network for which the quota is defined.

11. Communication network arrangement of any one of claims 1 to 10, comprising a user subscription storage component storing user subscription information of the mobile terminal, wherein the user subscription information specifies the quota.

12. Communication network arrangement of claim 11, wherein the user subscription information specifies for a plurality of network slices of the communication system whether a respective quota should be checked when there is a request by the mobile terminal for registration to the respective network slice or establishment of a session in the respective network slice, respectively.

13. Communication network arrangement of claim 11 or 12, wherein the management component and/or the quota monitoring component are configured, in reaction to the request by the mobile terminal, to check its local configuration or operator's policy available at the management component and/or to consult with the user subscription storage component to determine whether a quota should be checked for the network slice and to perform the detection, the notification and/or as the case may be the rejection of the request if the quota should be checked for the network slice.

14. Communication network arrangement of any one of claims 1 to 13, wherein the management component is configured to check whether the network slice quota has been reached based on a policy of a network provider of the communication system by means of local-configuration or by means of a network management and network orchestration platform of the network provider.

15. A method for handling registration and/or session requests comprising
detecting whether a quota which limits the maximum number of mobile terminals registered in a network slice and/or the maximum number of sessions provided in the network slice has been reached,
notifying a management component if the quota has been reached and
the management component rejecting a request of a mobile terminal for registration to the network slice or establishment of a session in the network slice if the quota has been reached.

## Amended claims

### Amended claims in accordance with Rule 137(2) EPC.

1. A communication network arrangement comprising
one or more network slices (108, 109, 3302) of a communication network;
a quota monitoring component (3303); and
a management component (3304), wherein
the quota monitoring component (3303) is configured to detect whether a quota which limits the maximum number of mobile terminals (108) registered in a network slice and/or the maximum number of sessions provided in the network slice has been reached,
the quota monitoring component (3303) is configured to notify the management component (3304) if the quota has been reached and
the management component (3304) is configured to reject a request of a mobile terminal (108) for registration to the network slice or establishment of a session in the network slice if the quota has been reached;
wherein the quota monitoring component (3303) receives information about the number of mobile terminals (108) registered in the network slice (108, 109, 3302) and/or the number of sessions provided in the network slice (108, 109, 3302) from a network function counting the number of mobile terminals (108) registered in the network slice (108, 109, 3302) and/or the number of sessions provided in the network slice (108, 109, 3302).

2. Communication network arrangement of claim 1, wherein the communication network is a 5G mobile communication network.

3. Communication network arrangement of any one of claims 1 or 2, further comprising a data acquisition component configured to acquire information about a current number of mobile terminals (108) registered in the network slice (108, 109, 3302) and/or a current number of sessions provided in the network slice (108, 109, 3302).

4. Communication network arrangement of any one of claims 1 to 3, wherein the quota limits the maximum number of mobile terminals (108) registered in the network slice (108, 109, 3302) and the management component (3304)comprises an Access and Mobility Management Function.

5. Communication network arrangement of any one of claims 1 to 4, wherein the quota limits the maximum number of sessions provided in the network slice (108, 109, 3302) and the management component (3304) comprises a Session Management Function.

6. Communication network arrangement of any one of claims 1 to 5, comprising a storage component (305) configured to store a specification of the quota.

7. Communication network arrangement of any one of claims 1 to 6, wherein the communication network arrangement comprises a first communication network and a second communication network of different providers and the management component (3304) is part of the first communication network and the quota monitoring component (3303) is part of the first communication network and/or the second communication network.

8. Communication network arrangement of any one of claims 1 to 6, wherein the communication network arrangement comprises a first communication network which is a visited communication network for the mobile terminal (108) and a second communication network which is a home communication network for the mobile terminal (108), wherein the management component (3304) is part of the visited communication network and wherein the quota monitoring component (3303)is part of the home communication network.

9. Communication network arrangement of any one of claims 1 to 6, wherein the communication network arrangement comprises a first communication network which is non-public network and a second communication network which is a public network, wherein the management component (3304) is part of the first communication network and wherein the quota monitoring component (3303)is part of the second communication network.

10. Communication network arrangement of any one of claims 7 to 9, wherein the request is a request of the mobile terminal (108) for a registration of a core network slice (108, 109, 3302) of the first communication network which maps to a network slice (108, 109, 3302) of the first communication network for which the quota is defined.

11. Communication network arrangement of any one of claims 1 to 10, comprising a user subscription storage component (305) storing user subscription information of the mobile terminal (108), wherein the user subscription information specifies the quota.

12. Communication network arrangement of claim 11, wherein the user subscription information specifies for a plurality of network slices of the communication system (108, 109, 3302) whether a respective quota should be checked when there is a request by the mobile terminal (108) for registration to the respective network slice (108, 109, 3302) or establishment of a session in the respective network slice (108, 109, 3302), respectively.

13. Communication network arrangement of claim 11 or 12, wherein the management component (3304) and/or the quota monitoring component (3303) are configured, in reaction to the request by the mobile terminal (108), to check its local configuration or operator's policy available at the management component (3304) and/or to consult with the user subscription storage component (305) to determine whether a quota should be checked for the network slice (108, 109, 3302) and to perform the detection, the notification and/or as the case may be the rejection of the request if the quota should be checked for the network slice (108, 109, 3302) .

14. Communication network arrangement of any one of claims 1 to 13, wherein the management component (3304) is configured to check whether the network slice quota has been reached based on a policy of a network provider of the communication system by means of local-configuration or by means of a network management and network orchestration platform of the network provider.

15. A method for handling registration and/or session requests comprising
detecting whether a quota which limits the maximum number of mobile terminals (108) registered in a network slice (108, 109, 3302) and/or the maximum number of sessions provided in the network slice has been reached,
notifying a management component (3304) if the quota has been reached and
the management component (3304) rejecting a request of a mobile terminal (108) for registration to the network slice or establishment of a session in the network slice if the quota has been reached;
wherein detecting whether the quota for the slice has been reached comprises receiving information about the number of mobile terminals (108) registered in the network slice and/or the number of sessions provided in the network slice from a network function counting the number of mobile terminals (108) registered in the network slice and/or the number of sessions provided in the network slice.
